(19) Europäisches Patentamt / European Patent Office / Office européen des brevets

(11) EP 4 495 847 A1

(12) # EUROPEAN PATENT APPLICATION

(43) Date of publication:
**22.01.2025 Bulletin 2025/04**

(21) Application number: **24189544.0**

(22) Date of filing: **18.07.2024**

(51) International Patent Classification (IPC):
***G06Q 10/04*** *(2023.01)* ***G06Q 10/06*** *(2023.01)*
***G06F 30/00*** *(2020.01)* ***G05B 19/418*** *(2006.01)*

(52) Cooperative Patent Classification (CPC):
**G06Q 10/06; G05B 19/418; G06F 30/20; G06Q 10/04; H04L 41/12; H04L 41/145;**
G06F 2111/10; G06F 2119/06; H04L 41/0823; H04L 41/22

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.07.2023 JP 2023117295**

(71) Applicants:
- **Kabushiki Kaisha Toshiba**
  **Tokyo 105-0023 (JP)**
- **Toshiba Energy Systems & Solutions Corporation**
  **Saiwai-ku**
  **Kawasaki-shi**
  **Kanagawa (JP)**

(72) Inventors:
- **WATANABE, Tsuneo**
  **Minato-ku, Tokyo (JP)**
- **KUBO, Yoji**
  **Kawasaki-shi, Kanagawa (JP)**
- **KOKOJIMA, Yoshiyuki**
  **Kawasaki-shi, Kanagawa (JP)**
- **URAYOSHI, Daiki**
  **Kawasaki-shi, Kanagawa (JP)**
- **YOSHIDA, Takufumi**
  **Minato-ku, Tokyo (JP)**
- **MURAYAMA, Dai**
  **Kawasaki-shi, Kanagawa (JP)**

(74) Representative: **Hoffmann Eitle**
**Patent- und Rechtsanwälte PartmbB**
**Arabellastraße 30**
**81925 München (DE)**

(54) **OPERATION PLAN CREATION DEVICE, OPERATION PLAN CREATION SYSTEM, OPERATION PLAN CREATION METHOD, AND STORAGE MEDIUM**

(57) According to some embodiments, an operation plan creation device of an embodiment includes a topology diagram creation unit, a topology information generation unit, and a model expression generation unit. The topology diagram creation unit creates a topology diagram in which a plurality of nodes are connected by an edge. The topology information generation unit generates characteristic information of the plurality of nodes in the topology diagram and connection information of the plurality of nodes connected by the edge. The model expression generation unit generates a model expression representing the characteristics of a system including a plurality of pieces of equipment based on the characteristic information and the connection information.

FIG. 1

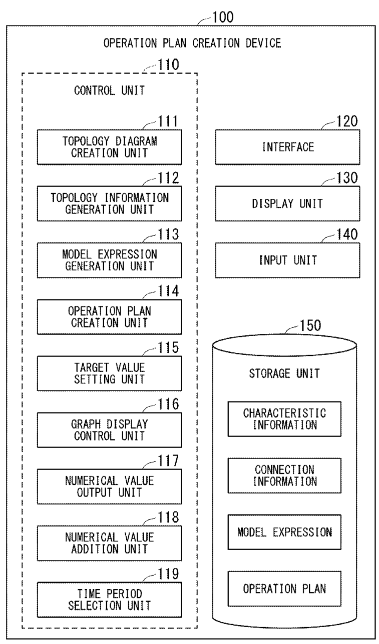


EP 4 495 847 A1

## Description

### FIELD

Embodiments described herein relate generally to an operation plan creation device, an operation plan creation system, an operation plan creation method, and a storage medium.

### BACKGROUND

In the related art, an operation plan creation device that creates an operation plan of a plurality of pieces of equipment such as generators is known. For example, an operation plan creation device of the related art creates an operation plan of a plurality of generators such that total cost is minimized, after acquiring characteristic data of the plurality of generators and power demand data.

In creating the operation plan, a model expression representing the characteristics of a system including the plurality of pieces of equipment needs to be created. However, since it is difficult to create the model expression in a case where the system has a complicated structure, or the like, much time may be required for optimizing the operation plan.

### BRIEF DESCRIPTION OF THE DRAWINGS

FIG. 1 is a configuration diagram of an operation plan creation device 100.
FIG. 2 is a diagram illustrating an example of an editor screen.
FIG. 3 is a diagram illustrating an example of characteristic information and connection information regarding a node.
FIG. 4 is a diagram illustrating an example of characteristic information regarding an edge.
FIG. 5 is a diagram illustrating operation plan creation processing that is executed based on a topology diagram 160 composed of a plurality of nodes and an edge.
FIG. 6 is a diagram illustrating operation plan creation processing that is executed based on a topology diagram 160 composed of a plurality of nodes, edges, and a branch.
FIG. 7 is a diagram illustrating operation plan creation processing in a case where an objective function branch is added to the topology diagram 160 of FIG. 6.
FIG. 8 is a diagram illustrating operation plan creation processing in a case where a target value branch is added to the topology diagram 160 of FIG. 7.
FIG. 9 is a diagram illustrating operation plan creation processing in a case where a target value of each of a plurality of time periods is set in a target value branch.
FIG. 10 is a diagram illustrating an example of target value data set by a target value setting unit 115.
FIG. 11 is a diagram illustrating an example of a graph that shows change in the target value with respect to time.
FIG. 12 is a diagram illustrating an example of a graph that shows change in an output value of a node N2 with respect to time.
FIG. 13 is a diagram illustrating an example of a graph that shows change in an output value of a node N3 with respect to time.
FIG. 14 is a diagram illustrating an example of numerical value file output processing that is executed by a numerical value output unit 117.
FIG. 15 is a diagram illustrating an example of a numerical value file output from the numerical value output unit 117.
FIG. 16 is a diagram illustrating operation plan creation processing in a case where an auxiliary branch is added to the topology diagram 160 of FIG. 8.
FIG. 17 is a diagram illustrating numerical value addition processing that is executed by a numerical value addition unit 118.
FIG. 18 is a diagram illustrating time period selection processing that is executed by a time period selection unit 119.
FIG. 19 is a flowchart illustrating operation plan creation processing that is executed by the operation plan creation device 100.
FIG. 20 is a diagram illustrating operation plan creation processing by an operation plan creation system 10 of a second embodiment.
FIG. 21 is a diagram illustrating operation plan creation processing by an operation plan creation system 10a of a third embodiment.
FIG. 22 is a diagram illustrating a specific application example of the topology diagram 160.

DETAILED DESCRIPTION

According to some embodiments, an operation plan creation device includes a topology diagram creation unit, a topology information generation unit, and a model expression generation unit. The topology diagram creation unit creates a topology diagram in which a plurality of nodes are connected by an edge. The topology information generation unit generates characteristic information of the plurality of nodes in the topology diagram and connection information of the plurality of nodes connected by the edge. The model expression generation unit generates a model expression representing the characteristics of a system including a plurality of pieces of equipment based on the characteristic information and the connection information.
Hereinafter, an operation plan creation device, an operation plan creation system, an operation plan creation method, and a program of an embodiment will be described with reference to the drawings.

(First Embodiment)

<Configuration>

FIG. 1 is a configuration diagram of an operation plan creation device 100. The operation plan creation device 100 is a computer that creates an operation plan of a plurality of pieces of equipment, and includes, for example, a control unit 110, an interface 120, a display unit 130, an input unit 140, and a storage unit 150. The control unit 110 includes a topology diagram creation unit 111, a topology information generation unit 112, a model expression generation unit 113, an operation plan creation unit 114, a target value setting unit 115, a graph display control unit 116, a numerical value output unit 117, a numerical value addition unit 118, and a time period selection unit 119. Details of these constituent elements included in the control unit 110 will be described below.
These constituent elements included in the control unit 110 are realized by a hardware processor such as a central processing unit executing a program (software), for example. Some or all of these components may be realized by hardware (circuit unit; including circuitry) such as a large scale integration (LSI), an application specific integrated circuit (ASIC), a field-programmable gate array (FPGA), or a graphics processing unit (GPU), or may be realized by software and hardware in cooperation. The program may be stored in advance in a storage device (a storage device including a non-transitory storage medium such as a hard disk drive (HDD) or flash memory, or may be stored in a removable storage medium (a non-transitory storage medium) such as a DVD or a CD-ROM and may be installed upon loading of the storage medium into a drive device.
The interface 120 is a communication interface for communication with an external apparatus via a network. The interface 120 is, for example, a network interface card.
The display unit 130 is a display device such as a liquid crystal display. The input unit 140 is an input device such as a keyboard or a pointing device.
The storage unit 150 is an HDD, a flash memory, a random access memory (RAM), or the like. The storage unit 150 may be a network attached storage (NAS) device that the operation plan creation device 100 can access via the network. In the storage unit 150, for example, data such as characteristic information, connection information, a model expression, and an operation plan is stored. Details of such data will be described below. In addition, in the storage unit 150, the above-described program may be stored.
FIG. 2 is a diagram illustrating an example of an editor screen. If the operation plan creation device 100 starts an editor by executing the program, the editor screen illustrated in FIG. 2 is displayed on the display unit 130. In the editor screen, a topology diagram 160, a component selection region 162, an edge icon 164, and an information input region 166 are included.
The topology diagram 160 is a map in which a plurality of components such as nodes or branches are connected by edges. The branches are components for performing branching of information flowing through an edge, function setting, value setting, or the like.
Specifically, FIG. 2 illustrates an example of the topology diagram 160 regarding power manufacturing using two gas engines. The topology diagram 160 includes a node indicating a gas engine 1, a node indicating a gas engine 2, an objective function branch, a target value branch, a branch for branching an input from the objective function branch, a branch for merging inputs from two nodes, and edges connecting these components.
The component selection region 162 is a region for selecting a plurality of components such as nodes or branches. In the component selection region 162, a plurality of components are listed. If a user selects one component from the component selection region 162 using the input unit 140, and drags and drops the selected component on the topology diagram 160, the selected component is added to the topology diagram 160.
The user selects the edge icon 164 using the input unit 140, and selects two components on the topology diagram 160, so that the two selected component can be connected by the edge.
If the user selects one component on the topology diagram 160 using the input unit 140, the information input region 166 is displayed on the editor screen. The user can input characteristic information regarding the component selected on the topology diagram 160 to the information input region 166 using the input unit 140.

For example, in a case where the component selected by the user is a node representing a gas engine, an input value x to the node is fuel [$m^3$/h], and an output value y from the node is a power amount [kW]. A relationship between the input value x and the output value y in the node can be represented by a primary expression of y = ax + b. For this reason, as the characteristic information of the node representing the gas engine, coefficients a and b of the primary expression can be set in the information input region 166.

The characteristic information that can be set in the information input region 166 is not limited thereto. For example, information such as an upper limit value and a lower limit value of the output value y may be made to be set in the information input region 166. Not only such characteristic information, but also information such as a node ID that is information for identifying the node or a node name indicating the name of the node may be made to be set in the information input region 166. Also in a case where an edge or a branch is selected, various kinds of information regarding the selected component may be made to be set in the information input region 166.

In the example illustrated in FIG. 2, a target value of a power demand amount is set in the target value branch, and a condition (objective function) that fuel is minimized is set in the objective function branch. The operation plan creation device 100 creates an optimum operation plan of the gas engine 1 and the gas engine 2 based on the set target value and the objective function.

For example, it is assumed that the following characteristic information is set in the node of the gas engine 1, an edge connected to an input side of the gas engine 1, and an edge connected to an output side of the gas engine 1.

<Gas engine 1>

- Node ID: gt1
- Node name: Gas engine 1
- Primary expression coefficient a: 12.5
- Primary expression coefficient b: 3.2
- Output upper limit: 150
- Output lower limit: 20
- When gas engine 1 is stopped, output is 0

<Edge connected to input side of gas engine 1>

- Edge ID: ed11
- Upper limit: 30
- Lower limit: 1e-10

<Edge connected to output side of gas engine 1>

- Edge ID: ed12
- Upper limit: No setting
- Lower limit: No setting

In this case, the operation plan creation device 100 creates the following model expressions (1) to (3). Here, ed11 is a value (fuel [$m^3$/h]) that is input to the gas engine 1, ed12 is a value (power amount [kW]) that is output from the gas engine 1, and edon1 is a binary variable indicating whether or not the gas engine 1 is in operation. In a case where the gas engine 1 is in operation, edon1 = 1, and in a case where the gas engine 1 is stopped, edon1 = 0. The following model expressions (1) to (3) express that, when ed11, which is the input value (fuel), is 0 and the gas engine 1 is stopped, ed12, which is the output value (power amount), is 0.

$$\mathrm{ed12} = (12.5 \times \mathrm{ed11}) + (3.2 \times \mathrm{edon1}) \ldots (1)$$

$$ed11 \leq 30 \times edon1 \ldots (2)$$

$$ed11 \geq (1e\text{-}10) \times edon1 \ldots (3)$$

The operation plan creation device 100 creates an optimum operation plan of the gas engine 1 and the gas engine 2 by creating model expressions with respect to the respective components included in the topology diagram 160 and solving the created model expressions.

FIG. 3 is a diagram illustrating an example of characteristic information and connection information regarding a node. The characteristic information and the connection information regarding the node are stored in the storage unit 150 in association with a node ID and a node name. The characteristic information is characteristic information (for example, the coefficients a and b of the primary expression) input in the information input region 166 in a case where any node is selected on the topology diagram 160. The connection information is information indicating an edge to which a node is connected. Specifically, the connection information is information including an edge ID for identifying the edge connected to the node. In a case where edges are connected to both an input side and an output side of a node, an edge ID of the edge connected to the input side of the node and an edge ID of the edge connected to the output side of the node are included in the connection information.

FIG. 4 is a diagram illustrating an example of characteristic information regarding an edge. The characteristic information regarding the edge is stored in the storage unit 150 in association with an edge ID. The characteristic information is characteristic information (for example, an upper limit value and a lower limit value) input in the information input region 166 in a case where any edge is selected on the topology diagram 160.

FIG. 5 is a diagram illustrating operation plan creation processing that is executed based on a topology diagram 160 composed of a plurality of nodes and edges. First, the topology diagram creation unit 111 creates the topology diagram 160 according to an operation of the user on the editor screen (FIG. 2). The topology diagram 160 of FIG. 5 illustrates that a node N1 and a node N2 are connected by an edge E1.

The topology information generation unit 112 generates characteristic information of the node N1, the node N2, and the edge E1 in the topology diagram 160 created by the topology diagram creation unit 111, and connection information of the node N1 and the node N2 connected by the edge E1.

The model expression generation unit 113 generates model expressions representing the characteristics of a system including a plurality of pieces of equipment based on the characteristic information and the connection information generated by the topology information generation unit 112. The model expressions generated by the model expression generation unit 113 are composed of an objective function that should be minimized or maximized, and a constraint condition representing a condition that the system represented by the topology diagram 160 should satisfy, to create an operation plan. The operation plan creation unit 114 creates an optimized operation plan of the plurality of pieces of equipment by solving the model expressions generated by the model expression generation unit 113. For example, the operation plan creation unit 114 may solve the model expression using a solver such as CBC or GUROBI.

FIG. 6 is a diagram illustrating operation plan creation processing that is executed based on the topology diagram 160 composed of a plurality of nodes, edges, and a branch. In FIG. 6, the topology diagram 160 includes a branch B1 for branching information flowing through an edge. In FIG. 6, a node N1 and the branch B1 are connected by an edge E1, the branch B1 and a node N2 are connected by an edge E2, and the branch B1 and a node N3 are connected by an edge E3.

For example, the branch B1 may distribute fuel flowing through the edge E1 to a gas engine of the node N2 and a gas engine of the node N3. In a case where such a branch B1 is disposed in the topology diagram 160, the model expression generation unit 113 generates a model expression including a distribution ratio at the branch B1, and the operation plan creation unit 114 can calculate an optimum distribution ratio at the branch B1 by solving model expressions.

FIG. 7 is a diagram illustrating operation plan creation processing in a case where an objective function branch is added to the topology diagram 160 of FIG. 6. In FIG. 7, the topology diagram 160 includes an objective function branch B2 for setting an objective function. In FIG. 7, the node N1 and the branch B1 are connected by the edge E1, the branch B1 and the node N2 are connected by the edge E2, the branch B1 and the node N3 are connected by the edge E3, and the objective function branch B2 and the node N1 are connected by an edge E4.

For example, in the objective function branch B2, an objective function such as minimization of fuel to be supplied to the node N1 is set. In a case where such an objective function branch B2 is disposed in the topology diagram 160, the operation plan creation unit 114 can create an operation plan of the plurality of pieces of equipment according to the objective function (for example, fuel minimization) set in the objective function branch B2 by solving model expressions.

FIG. 8 is a diagram illustrating operation plan creation processing in a case where a target value branch is added to the topology diagram 160 of FIG. 7. In FIG. 8, the topology diagram 160 includes a target value branch B3 for setting a target value. In FIG. 8, the node N1 and the branch B1 are connected by the edge E1, the branch B1 and the node N2 are connected by the edge E2, the branch B1 and the node N3 are connected by the edge E3, the objective function branch B2 and the node N1 are connected by the edge E4, the node N2 and the target value branch B3 are connected by an edge E5, and the node N3 and the target value branch B3 are connected by an edge E6.

For example, in the target value branch B3, a target value of a power demand amount is set. In a case where such a target value branch B3 is disposed in the topology diagram 160, the operation plan creation unit 114 can create an operation plan of the plurality of pieces of equipment (for example, gas engines) according to the target value (for example, the power demand amount) set in the target value branch B3 by solving model expressions.

FIG. 9 is a diagram illustrating operation plan creation processing in a case where a target value of each of a plurality of time periods is set in a target value branch. In FIG. 9, the topology diagram 160 includes a target value branch B3 for setting a target value. The target value setting unit 115 sets the target value of each of the plurality of time periods in the target value branch B3 according to an operation of the user using the input unit 140.

FIG. 10 is a diagram illustrating an example of target value data that is set by the target value setting unit 115. The target value data includes a mesh number, a time period, and a target value. The mesh number is a numerical value for specifying a time period. The mesh number is set as starting from 1, but is not limited thereto. For example, the mesh number may be set to start from 101. The time period is data indicating a time period in a day. The time period is set as data in units of 30 minutes, but is not limited thereto. For example, the time period may be data in units of one hour. The target value is data indicating a target value (for example, a power demand amount) set for each of the plurality of time periods.

In a case where the target value data as illustrated in FIG. 10 is set by the target value setting unit 115, the operation plan creation unit 114 performs an optimization operation to calculate a solution satisfying an objective function (for example, fuel minimization) for each of the plurality of time periods. Therefore, the operation plan creation unit 114 can create an operation plan of the plurality of pieces of equipment (for example, gas engines) according to the target value (for example, the power demand amount) set in the target value branch B3 for each of the plurality of time periods.

For example, the above-described model expressions (1) to (3) regarding the gas engine 1 can be represented as model expressions (4) to (6) of each of the plurality of time periods using t representing the mesh number.

$$ed12_t = (12.5 \times ed11_t) + (3.2 \times edon1_t) \ ... \ (4)$$

$$ed11_t \leq 30 \times edon1_t \ ... \ (5)$$

$$ed11_t \geq (1e\text{-}10) \times edon1_t \ ... \ (6)$$

Similarly, in a case where there is a node regarding the gas engine 2, model expressions (7) to (9) of each of the plurality of time periods regarding the gas engine 2 are created. ed21_t is a value (fuel [$m^3$/h]) that is input to the gas engine 2, ed22_t is a value (power amount [kW]) that is output from the gas engine 2, and edont_t is a binary variable indicating whether or not the gas engine 2 is in operation. In a case where the gas engine 2 is in operation, edon2_t = 1, and in a case where the gas engine 2 is stopped, edon2_t = 0.

$$ed22_t = (12.5 \times ed21_t) + (3.2 \times edon2_t) \ ... \ (7)$$

$$ed21_t \leq 30 \times edon2_t \ ... \ (8)$$

$$ed21_t \geq (1e\text{-}10) \times edon2_t \ ... \ (9)$$

The operation plan creation unit 114 can create an operation plan of the plurality of pieces of equipment (for example, gas engines) according to the target value (for example, the power demand amount) set in the target value branch B3 for each of the plurality of time periods by solving the model expressions regarding the respective components included in the topology diagram 160 including these model expressions.

The graph display control unit 116 displays, on the display unit 130, a graph that shows a result of the optimization operation performed by the operation plan creation unit 114. For example, the graph display control unit 116 may display, on the display unit 130, a graph that shows the target value (for example, the power demand amount) of each of the plurality of time periods, output values (for example, power generation amounts of gas engines) of the plurality of pieces of equipment, input values (for example, amounts of fuel consumed), and the like. For example, the graph display control unit 116 may display, on the display unit 130, a graph that shows a result of the optimization operation, using an application such as Grafana.

FIGS. 11 to 13 are diagram illustrating a graph that is displayed on the display unit 130. FIG. 11 is a diagram illustrating an example of a graph that shows change in target value with respect to time. In FIG. 11, the horizontal axis indicates date and time, and the vertical axis indicates the target value (power demand amount). FIG. 12 is a diagram illustrating an example of a graph that shows change in the output value of the node N2 with respect to time. In FIG. 12, the horizontal axis indicates date and time, and the vertical axis indicates the output value (power amount) of the node N2 (gas engine). FIG. 13 is a diagram illustrating an example of a graph that shows change in the output value of the node N3 with respect to time. In FIG. 13, the horizontal axis indicates date and time, and the vertical axis indicates the output value (power amount) of the node N3 (gas engine). These graphs are an example, and the graph display control unit 116 may display, on the display unit 130, a graph that shows change in the input value of each node with respect to time, change in total generated power with respect to time, or the like.

FIG. 14 is a diagram showing an example of numerical value file output processing that is executed by the numerical value output unit 117. The numerical value output unit 117 outputs a file in which numerical values indicating the result of the optimization operation performed by the operation plan creation unit 114 are described. For example, the graph display control unit 116 may output a file in which numerical values indicating the target value (for example, the power demand amount) of each of the plurality of time periods, the output values (for example, the power generation amounts of the gas engines) of the plurality of pieces of equipment, the input values (for example, the amounts of fuel consumed), and the like are described. For example, the numerical value output unit 117 may output a CSV format file in which the numerical values indicating the result of the optimization operation are described.

FIG. 15 is a diagram illustrating an example of a numerical value file that is output from the numerical value output unit 117. As illustrated in FIG. 15, the numerical value file includes the mesh number, date and time, the objective function (fuel amount), the target value (power demand amount), the output value (generated power) of each node, and the input value (used fuel amount) of each node. The numerical value file is an example, and the numerical value file may include total generated power, a total used fuel amount, and the like.

FIG. 16 is a diagram illustrating operation plan creation processing in a case where an auxiliary branch is added to the topology diagram 160 of FIG. 8. In FIG. 16, the topology diagram 160 includes an auxiliary branch B5 for setting a function that is used to avoid a situation in which the result of the optimization operation from has no solution. In FIG. 16, the node N1 and the branch B1 are connected by the edge E1, the branch B1 and the node N2 are connected by the edge E2, the branch B1 and the node N3 are connected by the edge E3, the objective function branch B2 and the node N1 are connected by the edge E4, the node N2 and a branch B4 are connected by the edge E5, the node N3 and the branch B4 are connected b y the edge E6, the branch B4 and the target value branch B3 are connected by an edge E7, and the branch B4 and the auxiliary branch B5 are connected by an edge E8.

For example, it is assumed that a function of consuming an enormous amount of fuel to output power is set with respect to the auxiliary branch B5. In a case where such an auxiliary branch B5 is disposed in the topology diagram 160, and a condition (objective function) of minimizing fuel is set in the objective function branch B2, a solution that uses an output value from the auxiliary branch B5 should not be obtained. However, for example, in a case where the gas engine of one of the node N2 and the node N3 is stopped, and the target value (for example, the power demand amount) set in the target value branch B3 may not be attained only with the gas engine of the other node, the solution that uses the output from the auxiliary branch B5 is not obtained even if an enormous amount of fuel is consumed. In this way, the with addition of the auxiliary branch B5 to the topology diagram 160, it is possible to avoid a situation in which there is no solution.

FIG. 17 is a diagram illustrating numerical value addition processing that is executed by the numerical value addition unit 118. The numerical value addition unit 118 adds a numerical value indicating a result of optimization operation of at least one of a plurality of nodes, edges, and branches to the topology diagram 160. Specifically, in the topology diagram 160 of FIG. 17, a numerical value of 123.5 is added to the objective function branch B2 and the edge E4, a numerical value of 63.5 is added to the node N1, the edge E1, and the branch B1, a numerical value of 12.2 is added to the edge E2, a numerical value of 51.3 is added to the edge E3, a numerical value of 33.5 is added to the node N2 and the edge E5, a numerical value of 44.3 is added to the node N3 and the edge E6, and a numerical value of 77.8 is added to the target value branch B3.

For example, with the addition of the numerical values as illustrated in FIG. 17 to the topology diagram 160, it is understood that the target value (for example, the power demand amount) set in the target value branch B3 is 77.8 [kW], the power generation amount of the gas engine of the node N2 is 33.5 [kW], the power generation amount of the gas engine of the node N3 is 44.3 [kW], and fuel to be used is 123.5 [$m^3$/h],

In this way, the numerical value addition unit 118 adds the numerical values indicating the result of the optimization operation of at least one of the plurality of nodes, the edges, and the branches to the topology diagram 160 to allow the user to easily ascertain the result of the optimization operation.

FIG. 18 is a diagram illustrating time period selection processing that is executed by the time period selection unit 119. The time period selection unit 119 selects one time period among the plurality of time periods described with reference to FIG. 10 according to an operation of the user using the input unit 140. The numerical value addition unit 118 adds a numerical value of the time period selected by the time period selection unit 119 to the topology diagram. The time period selection unit 119 may allow the user to select year, month, and day as well as the time period.

Specifically, in the topology diagram 160 of FIG. 18, the numerical value indicating the result of the optimization operation are added to the topology diagram 160 similarly to FIG. 17, and the time period (2023/6/5 13:00) selected by the time period selection unit 119 is also added to the topology diagram 160. Therefore, the user can easily ascertain the result of the optimization operation of each of the plurality of time periods.

FIG. 19 is a flowchart illustrating operation plan creation processing that is executed by the operation plan creation device 100. For example, the control unit 110 of the operation plan creation device 100 executes the operation plan creation processing by executing the program stored in the storage unit 150.

First, the topology diagram creation unit 111 creates the topology diagram 160 in which a plurality of nodes are connected by edges (S101). For example, the topology diagram creation unit 111 creates the topology diagram 160 according to an operation of the user on the editor screen of FIG. 2.

Next, the topology information generation unit 112 generates the characteristic information of the plurality of nodes in the topology diagram 160 and the connection information of the plurality of nodes connected by the edges (S102). For example, the topology information generation unit 112 generates topology information (characteristic information and connection information) illustrated in FIGS. 3 and 4 based on the topology diagram 160 created by the topology diagram creation unit 111.

Next, the model expression generation unit 113 generates the model expressions representing the characteristics of the system including the plurality of pieces of equipment based on the characteristic information and the connection information generated by the topology information generation unit 112 (S103). For example, the model expression generation unit 113 generates the above-described model expressions (1) to (3) with respect to the node regarding the gas engine. The model expression generation unit 113 generates the model expressions with respect to the respective components included in the topology diagram 160.

Next, the operation plan creation unit 114 creates the optimized operation plan of the plurality of pieces of equipment by solving the model expressions generated by the model expression generation unit 113 (S104). For example, the operation plan creation unit 114 creates the operation plan including the distribution ratio of fuel to each gas engine or the stop/operation of each gas engine by solving the model expressions using a CBC solver.

The operation plan (the result of the optimization operation) created by the operation plan creation unit 114 is displayed in a form of a graph on the display unit 130 by the graph display control unit 116 and is output in a form of a numerical value file by the numerical value output unit 117, according to an operation of the user using the input unit 140.

The operation plan creation device 100 of the first embodiment described above has the topology diagram creation unit 111, the topology information generation unit 112, the model expression generation unit 113, and the operation plan creation unit 114. The topology diagram creation unit 111 creates the topology diagram 160 in which a plurality of nodes are connected by edges. The topology information generation unit 112 generates the characteristic information of the plurality of nodes in the topology diagram 160 and the connection information of the plurality of nodes connected by the edges. The model expression generation unit 113 generates the model expressions representing the characteristics of the system including the plurality of pieces of equipment based on the characteristic information and the connection information. The operation plan creation unit 114 creates the optimized operation plan of the plurality of pieces of equipment by solving the model expressions. Therefore, the operation plan creation unit 114 can optimize the operation plan of the plurality of pieces of equipment in a short time.

(Second Embodiment)

FIG. 20 is a diagram illustrating operation plan creation processing by an operation plan creation system 10 of a second embodiment. In the above-described first embodiment, it is assumed that the entire operation plan creation processing is executed by the operation plan creation device 100. In contrast, in the second embodiment, it is assumed that the operation plan creation processing is executed by the operation plan creation system 10 including an operation plan creation device 100a and a user terminal device 200. For example, in the second embodiment, it is assumed that the operation plan creation device 100a is provided as a cloud server, and the operation plan creation device 100a executes the operation plan creation processing in cooperation with the user terminal device 200. Hereinafter, details of the second embodiment will be described.

As illustrated in FIG. 20, the operation plan creation device 100a includes the topology information generation unit 112, the model expression generation unit 113, the operation plan creation unit 114, the graph display control unit 116, and the interface 120. The user terminal device 200 includes a topology diagram creation unit 211 and a target value setting unit 215.

The user terminal device 200 includes a display unit (not illustrated). If the user terminal device 200 starts the editor by executing the program, the editor screen illustrated in FIG. 2 is displayed on the display unit of the user terminal device 200. The topology diagram creation unit 211 creates a topology diagram 160 according to an operation of the user on the editor screen. The target value setting unit 115 sets a target value of each of a plurality of time periods in the target value branch B3 according to an operation of the user using the input unit 140.

The user terminal device 200 transmits the topology diagram 160 created by the topology diagram creation unit 211 and the target value of each of the plurality of time periods set by the target value setting unit 115 to the operation plan creation device 100a. The operation plan creation device 100a receives the topology diagram 160 and the target value of each of the plurality of time periods transmitted from the user terminal device 200, via the interface 120.

The topology information generation unit 112 generates characteristic information and connection information of the respective components (nodes, edges, branches, and the like) in the topology diagram 160 received via the interface 120. The model expression generation unit 113 generates model expressions representing characteristics of a system including a plurality of pieces of equipment based on the characteristic information and the connection information generated by the topology information generation unit 112. The model expression generation unit 113 generates model expressions of each of the plurality of time periods based on the target value of the each of the plurality of time periods received via the interface 120.

The operation plan creation unit 114 creates an optimized operation plan of the plurality of pieces of equipment of each of the plurality of time periods by solving the model expressions of each of the plurality of time periods generated by the model expression generation unit 113. The graph display control unit 116 generates a graph that shows a result (operation plan) of the optimization operation performed by the operation plan creation unit 114, and transmits the graph to the user terminal device 200 via the interface 120.

If the graph that shows the result (operation plan) of the optimization operation is received from the operation plan creation device 100a, the user terminal device 200 displays the received graph on the display unit of the user terminal device 200. For example, the operation plan creation device 100a may display, on the display unit, the graph that shows the result of the optimization operation, using an application such as Grafana.

The operation plan creation system 10 of the second embodiment described above includes the user terminal device 200 and the operation plan creation device 100a. The user terminal device 200 has the topology diagram creation unit 211. The topology diagram creation unit 211 creates the topology diagram 160 in which a plurality of nodes are connected by edges. The operation plan creation device 100a has the topology information generation unit 112, the model expression generation unit 113, and the operation plan creation unit 114. The topology information generation unit 112 generates the characteristic information of the plurality of nodes in the topology diagram 160 and the connection information of the plurality of nodes connected by the edges. The model expression generation unit 113 generates the model expressions representing the characteristics of the system including the plurality of pieces of equipment based on the characteristic information and the connection information. The operation plan creation unit 114 creates the optimized operation plan of the plurality of pieces of equipment by solving the model expressions. Therefore, the operation plan creation system 10 can optimize the operation plan of the plurality of pieces of equipment in a short time.

(Third Embodiment)

FIG. 21 is a diagram illustrating operation plan creation processing by an operation plan creation system 10 of a third embodiment. In the above-described second embodiment, it is assumed that the operation plan creation processing is executed by the operation plan creation system 10 including the operation plan creation device 100a and the user terminal device 200. In contrast, in the third embodiment, it is assumed that the operation plan creation processing is executed by an operation plan creation system 10a including an operation plan creation device 100b, a user terminal device 200, and a site terminal device 300. For example, in the third embodiment, it is assumed that the operation plan creation device 100b is provided as a cloud server, and the operation plan creation device 100b executes the operation plan creation processing in cooperation with the user terminal device 200 and the site terminal device 300. Hereinafter, details of the third embodiment will be described.

As illustrated in FIG. 21, the operation plan creation device 100b includes the topology information generation unit 112, the model expression generation unit 113, the operation plan creation unit 114, the graph display control unit 116, and the interface 120. The user terminal device 200 includes the topology diagram creation unit 211 and the target value setting unit 215. The site terminal device 300 includes a site information transmission unit 310.

The user terminal device 200 includes the display unit (not illustrated). If the user terminal device 200 starts the editor by executing the program, the editor screen illustrated in FIG. 2 is displayed on the display unit of the user terminal device 200. The topology diagram creation unit 211 creates the topology diagram 160 according to an operation of the user on the editor screen. The target value setting unit 115 sets the target value of each of the plurality of time periods in the target value branch B3 according to an operation of the user using the input unit 140.

The user terminal device 200 transmits the topology diagram 160 created by the topology diagram creation unit 211 and the target value of each of the plurality of time periods set by the target value setting unit 115 to the operation plan creation device 100b. The operation plan creation device 100b receives the topology diagram 160 and the target value of each of the plurality of time periods transmitted from the user terminal device 200, via the interface 120.

The site terminal device 300 is a terminal device that collects information from a site. The site information transmission unit 310 transmits site information indicating actual values obtained at the site. For example, the site information may be an actual power generation amount of a gas engine installed at the site, a fuel amount actually consumed, and the like. The operation plan creation device 100b receives the site information transmitted from the site terminal device 300, via the interface 120.

The topology information generation unit 112 generates characteristic information and connection information of the respective components (nodes, edges, branches, and the like) in the topology diagram 160 received via the interface 120. The model expression generation unit 113 generates model expressions representing characteristics of a system including a plurality of pieces of equipment based on the site information received from the site terminal device 300 and the characteristic information and the connection information generated by the topology information generation unit 112. The model expression generation unit 113 generates model expressions of each of the plurality of time periods based on the target value of each of the plurality of time periods received via the interface 120. In this way, the model expression generation unit 113 can make the model expressions hand over a previous operation state by reflecting the site information indicating the actual values obtained at the site in the model expressions. Thus, it is possible to generate high-accuracy model expressions.

The operation plan creation unit 114 creates an optimized operation plan of the plurality of pieces of equipment of each of the plurality of time periods by solving the model expressions of each of the plurality of time periods generated by the model expression generation unit 113. The graph display control unit 116 generates a graph that shows a result (operation plan) of the optimization operation performed by the operation plan creation unit 114, and transmits the graph to the user terminal device 200 via the interface 120.

If the graph that shows the result (operation plan) of the optimization operation is received from the operation plan creation device 100b, the user terminal device 200 displays the received graph on the display unit of the user terminal device 200. For example, the operation plan creation device 100b may display, on the display unit, the graph that shows the result of the optimization operation, using an application such as Grafana.

The operation plan creation system 10a of the third embodiment described above includes the user terminal device 200, the operation plan creation device 100b, and the site terminal device 300. The site terminal device 300 transmits the site information indicating the actual values obtained at the site. The model expression generation unit 113 of the operation plan creation device 100b generates the model expressions representing the characteristics of the system including the plurality of pieces of equipment based on the site information received from the site terminal device and the characteristic information and the connection information generated by the topology information generation unit 112. Therefore, the operation plan creation system 10a can generate high-accuracy model expressions.

(Specific Application Example)

FIG. 22 is a diagram illustrating a specific application example of a topology diagram 160. The topology diagram 160 illustrated in FIG. 22 is a map regarding a power generation system having a solar panel and a storage battery. The topology diagram 160 includes a node regarding power purchase, a node regarding $CO_2$ emission, a node regarding the solar panel, a node regarding the storage battery, and a node regarding a storage loss. A power demand amount is set as a target value branch. A condition of minimizing cost required for power purchase is set as an objective function.

The topology diagram 160 illustrated in FIG. 22 is a map showing that an amount of power generated by the solar panel and an amount of power purchased are combined to attain a power demand amount as a target value. In a case where the power generated by the solar panel is stored in the storage battery, it is necessary to consider a storage loss. In addition, it is necessary to consider a $CO_2$ emission amount according to the amount of power purchased. Furthermore, it is necessary to consider that the cost upon power purchase is different depending on the time period such as being expensive at night than during the daytime. An optimum operation plan of the solar panel or the storage battery can be created for each of a plurality of time periods by solving model expressions created based on the topology diagram of FIG. 22.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

**1.** An operation plan creation device comprising:

a topology diagram creation unit configured to create a topology diagram in which a plurality of nodes are connected by an edge;

a topology information generation unit configured to generate characteristic information of the plurality of nodes in the topology diagram and connection information of the plurality of nodes connected by the edge; and

a model expression generation unit configured to generate a model expression representing characteristics of a system including a plurality of pieces of equipment based on the characteristic information and the connection information.

**2.** The operation plan creation device according to claim 1, further comprising:
an operation plan creation unit configured to create an optimized operation plan of the plurality of pieces of equipment by solving the model expression generated by the model expression generation unit.

**3.** The operation plan creation device according to claim 1,
wherein the model expression generated by the model expression generation unit is composed of an objective function to be minimized or maximized and a constraint condition representing a condition that the system satisfies, to create the operation plan.

**4.** The operation plan creation device according to claim 1,
wherein the topology diagram creation unit adds a branch for performing branching of information flowing through the edge, function setting, or value setting in the topology diagram.

**5.** The operation plan creation device according to claim 4,
wherein the topology diagram creation unit adds an objective function branch for setting an objective function as the branch to the topology diagram.

**6.** The operation plan creation device according to claim 5,
wherein the topology diagram creation unit adds a target value branch for setting a target value as the branch to the topology diagram.

**7.** The operation plan creation device according to 6, further comprising:

an operation plan creation unit configured to create an optimized operation plan of the plurality of pieces of equipment by solving the model expression generated by the model expression generation unit; and
a target value setting unit configured to set the target value for each of a plurality of time period in the target value branch,
wherein the operation plan creation unit performs an optimization operation to calculate a solution satisfying the objective function for each of the plurality of time periods.

**8.** The operation plan creation device according to claim 7, further comprising:
a graph display control unit configured to display, on a display unit, a graph that shows a result of the optimization operation.

**9.** The operation plan creation device according to claim 7, further comprising:
a numerical value output unit configured to output a file in which a numerical value indicating a result of the optimization operation is described.

**10.** The operation plan creation device according to claim 7,
wherein the topology diagram creation unit adds an auxiliary branch for setting a function used to avoid a situation in which a result of the optimization operation has no solution, to the topology diagram as the branch.

**11.** The operation plan creation device according to claim 7, further comprising:
a numerical value addition unit configured to add a numerical value indicating a result of the optimization operation of at least one of the plurality of nodes, the edge, and the branch to the topology diagram.

**12.** The operation plan creation device according to claim 11, further comprising:

a time period selection unit configured to select one time period among the plurality of time periods,
wherein the numerical value addition unit adds the numerical value of the time period selected by the time period selection unit to the topology diagram.

**13.** An operation plan creation system comprising:

a user terminal device; and
an operation plan creation device,
wherein the user terminal device includes a topology diagram creation unit configured to create a topology diagram in which a plurality of nodes are connected by an edge, and
the operation plan creation device includes
a topology information generation unit configured to generate characteristic information of the plurality of nodes in the topology diagram and connection information of the plurality of nodes connected by the edge, and
a model expression generation unit configured to generate a model expression representing characteristics of a system including a plurality of pieces of equipment based on the characteristic information and the connection information.

**14.** The operation plan creation system according to claim 13, further comprising:

a site terminal device configured to transmit site information indicating an actual value obtained at a site,
wherein the model expression generation unit generates the model expression based on the site information received from the site terminal device, the characteristic information, and the connection information.

**15.** An operation plan creation method comprising, at an operation plan creation device:

creating a topology diagram in which a plurality of nodes are connected by an edge;
generating characteristic information of the plurality of nodes in the topology diagram and connection information of the plurality of nodes connected by the edge; and
generating a model expression representing characteristics of a system including a plurality of pieces of equipment based on the characteristic information and the connection information.

**16.** A non-transitory computer readable storage medium storing a program executed by a computer, the program instructing the computer to:

create a topology diagram in which a plurality of nodes are connected by an edge;
generate characteristic information of the plurality of nodes in the topology diagram and connection information of the plurality of nodes connected by the edge; and
generate a model expression representing characteristics of a system including a plurality of pieces of equipment based on the characteristic information and the connection information.

FIG. 1

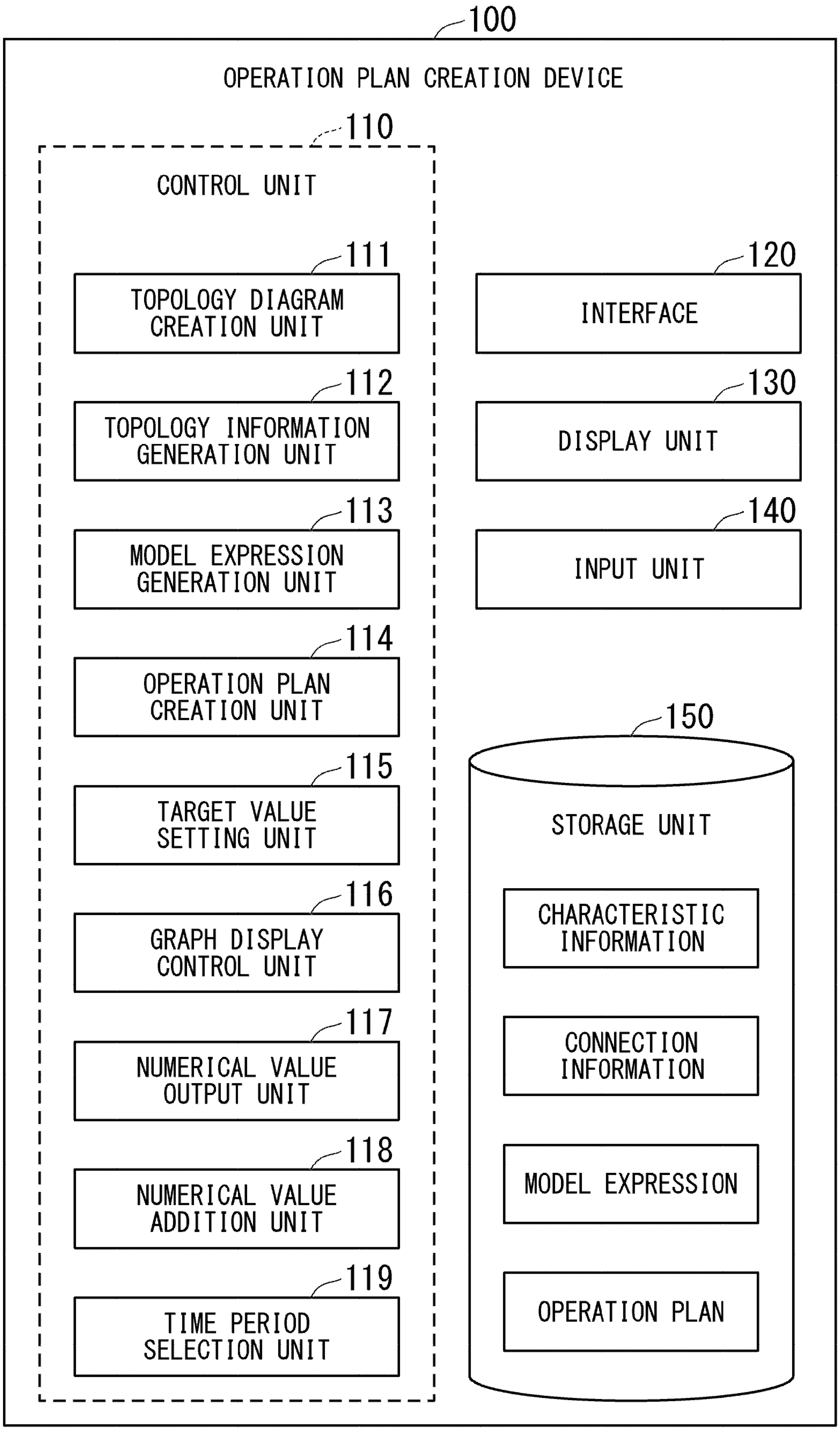
100
OPERATION PLAN CREATION DEVICE
110
CONTROL UNIT
111
TOPOLOGY DIAGRAM CREATION UNIT
112
TOPOLOGY INFORMATION GENERATION UNIT
113
MODEL EXPRESSION GENERATION UNIT
114
OPERATION PLAN CREATION UNIT
115
TARGET VALUE SETTING UNIT
116
GRAPH DISPLAY CONTROL UNIT
117
NUMERICAL VALUE OUTPUT UNIT
118
NUMERICAL VALUE ADDITION UNIT
119
TIME PERIOD SELECTION UNIT
120
INTERFACE
130
DISPLAY UNIT
140
INPUT UNIT
150
STORAGE UNIT
CHARACTERISTIC INFORMATION
CONNECTION INFORMATION
MODEL EXPRESSION
OPERATION PLAN

FIG. 2

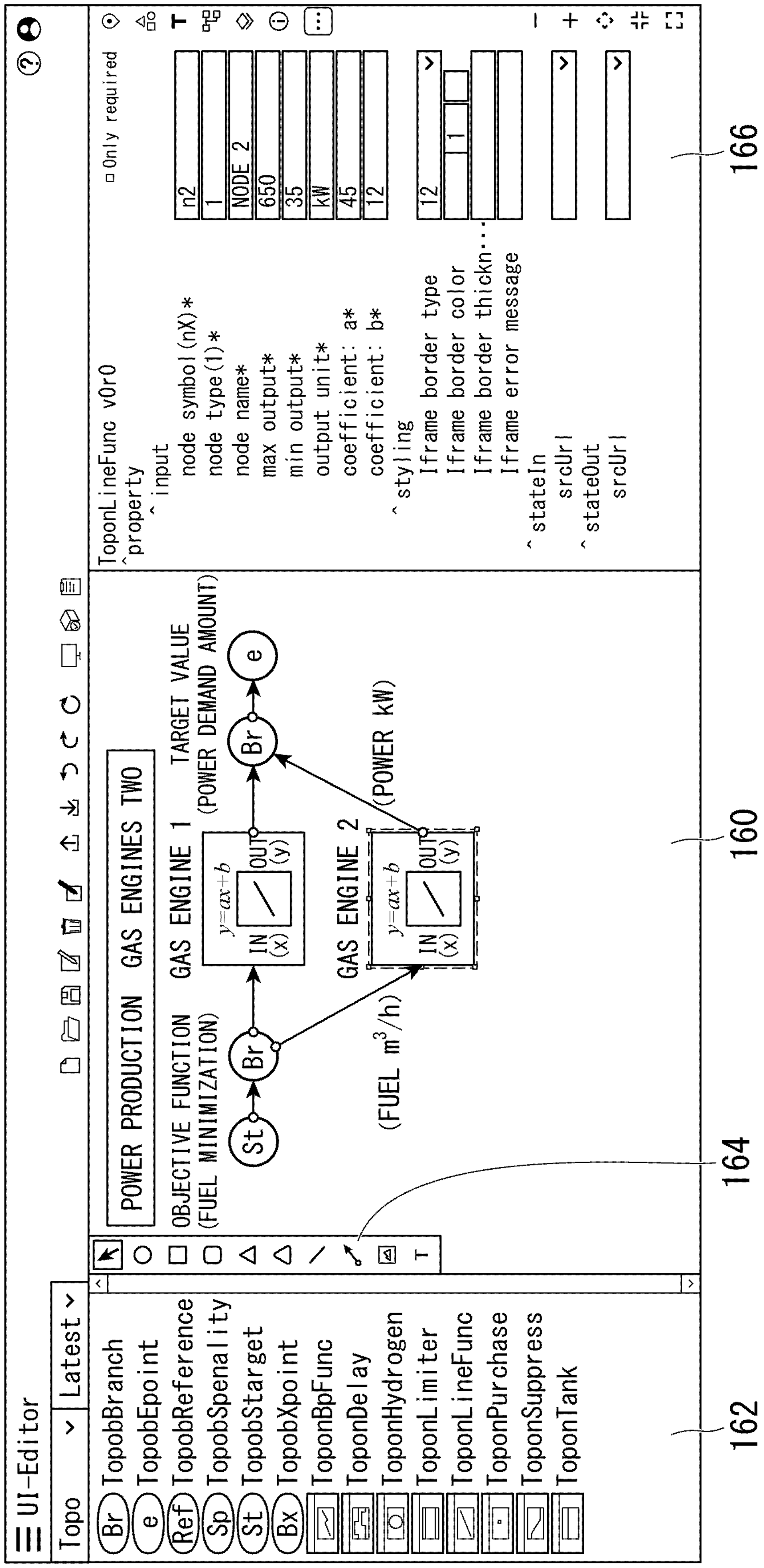
UI-Editor
Topo
Latest
Br TopobBranch
e TopobEpoint
Ref TopobReference
Sp TopobSpenality
St TopobStarget
Bx TopobXpoint
ToponBpFunc
ToponDelay
ToponHydrogen
ToponLimiter
ToponLineFunc
ToponPurchase
ToponSuppress
ToponTank
POWER PRODUCTION GAS ENGINES TWO
OBJECTIVE FUNCTION
(FUEL MINIMIZATION)
TARGET VALUE
(POWER DEMAND AMOUNT)
GAS ENGINE 1
GAS ENGINE 2
St
Br
e
y=ax+b
IN (x)
OUT (y)
(FUEL m3/h)
(POWER kW)
ToponLineFunc v0r0
Only required
property
input
node symbol(nX)* n2
node type(1)* 1
node name* NODE 2
max output* 650
min output* 35
output unit* kW
coefficient: a* 45
coefficient: b* 12
styling
Iframe border type 12
Iframe border color 1
Iframe border thickn···
Iframe error message
stateIn
srcUrl
stateOut
srcUrl
162
164
160
166

FIG. 3

| NODE ID | NODE NAME | CHARACTERISTIC INFORMATION | CONNECTION INFORMATION |
|---|---|---|---|
| gt1 | GAS ENGINE 1 | a=12.5、b=3.2、··· | INPUT: ed11, OUTPUT: ed12 |
| gt2 | GAS ENGINE 2 | ··· | ··· |
| ··· | ··· | ··· | ··· |

FIG. 4

| EDGE ID | CHARACTERISTIC INFORMATION |
|---|---|
| ed11 | UPPER LIMIT: 30, LOWER LIMIT: 1e-10, ... |
| ed12 | ··· |
| ··· | ··· |

FIG. 5

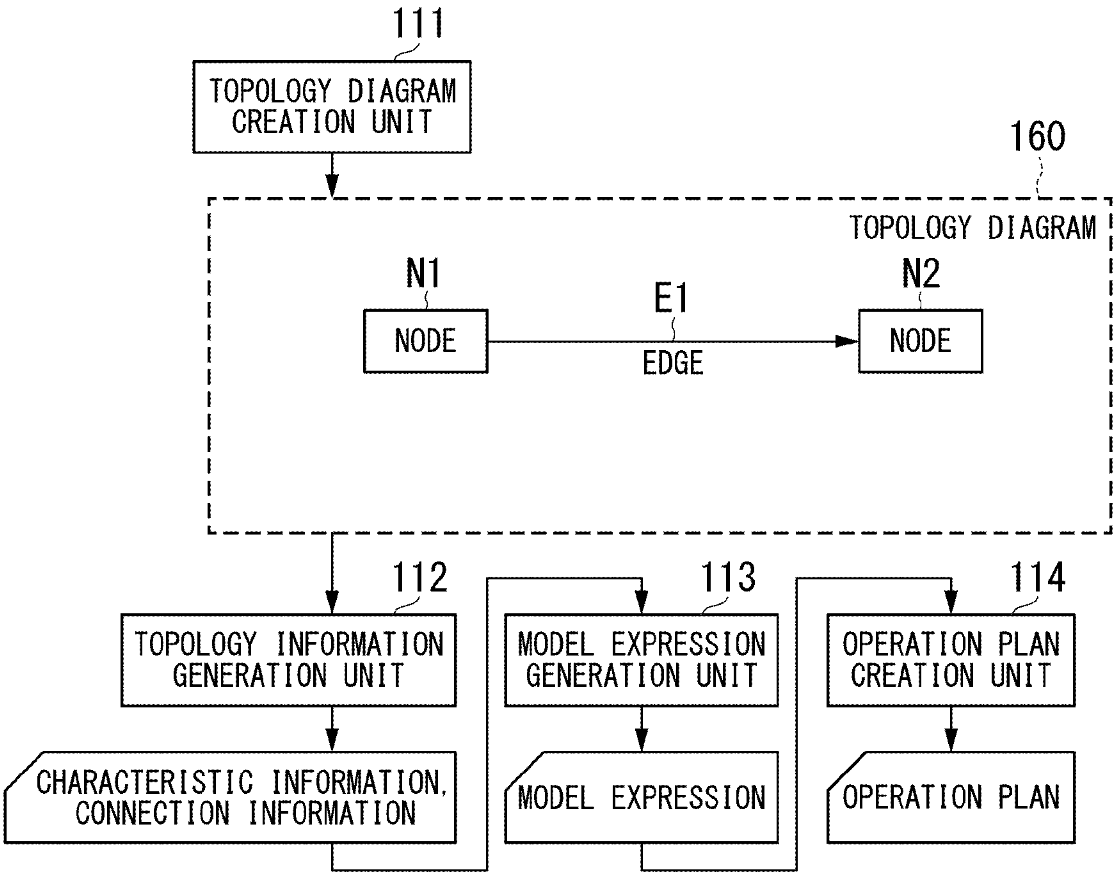

FIG. 6

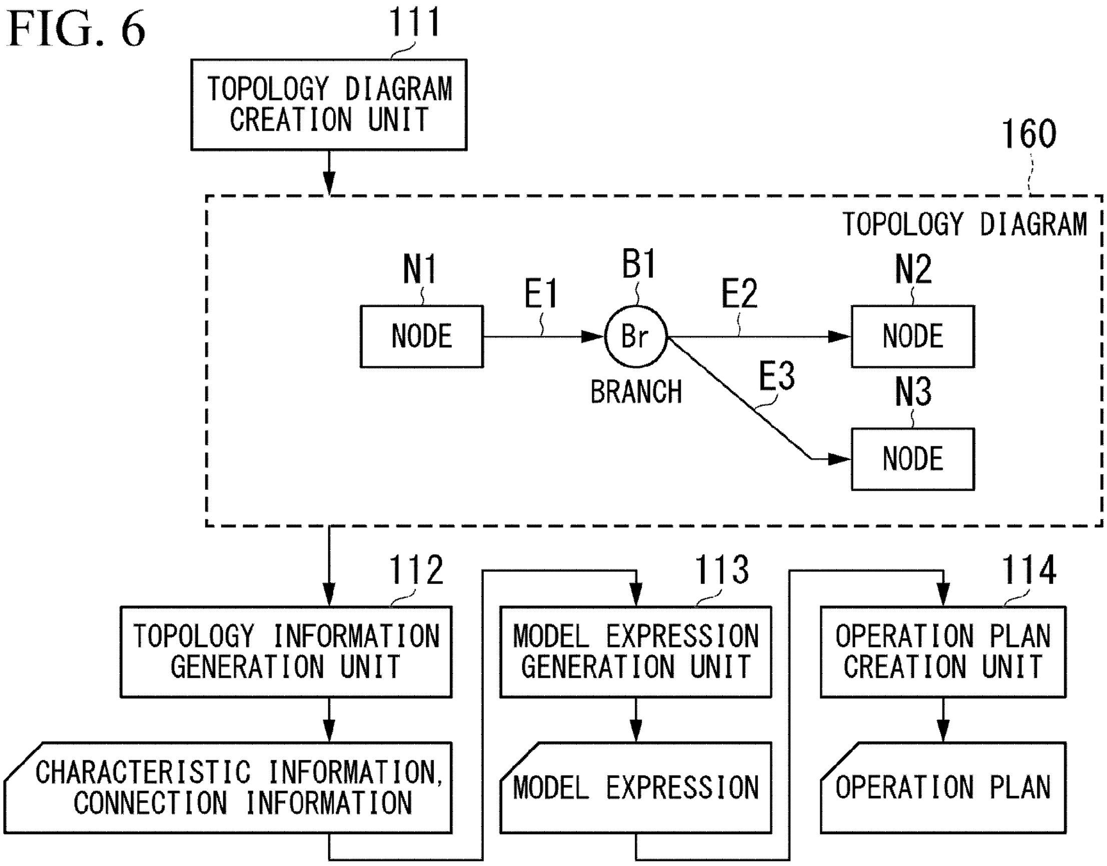
111
TOPOLOGY DIAGRAM CREATION UNIT
160
TOPOLOGY DIAGRAM
N1
NODE
E1
B1
Br
BRANCH
E2
N2
NODE
E3
N3
NODE
112
TOPOLOGY INFORMATION GENERATION UNIT
CHARACTERISTIC INFORMATION, CONNECTION INFORMATION
113
MODEL EXPRESSION GENERATION UNIT
MODEL EXPRESSION
114
OPERATION PLAN CREATION UNIT
OPERATION PLAN

FIG. 7

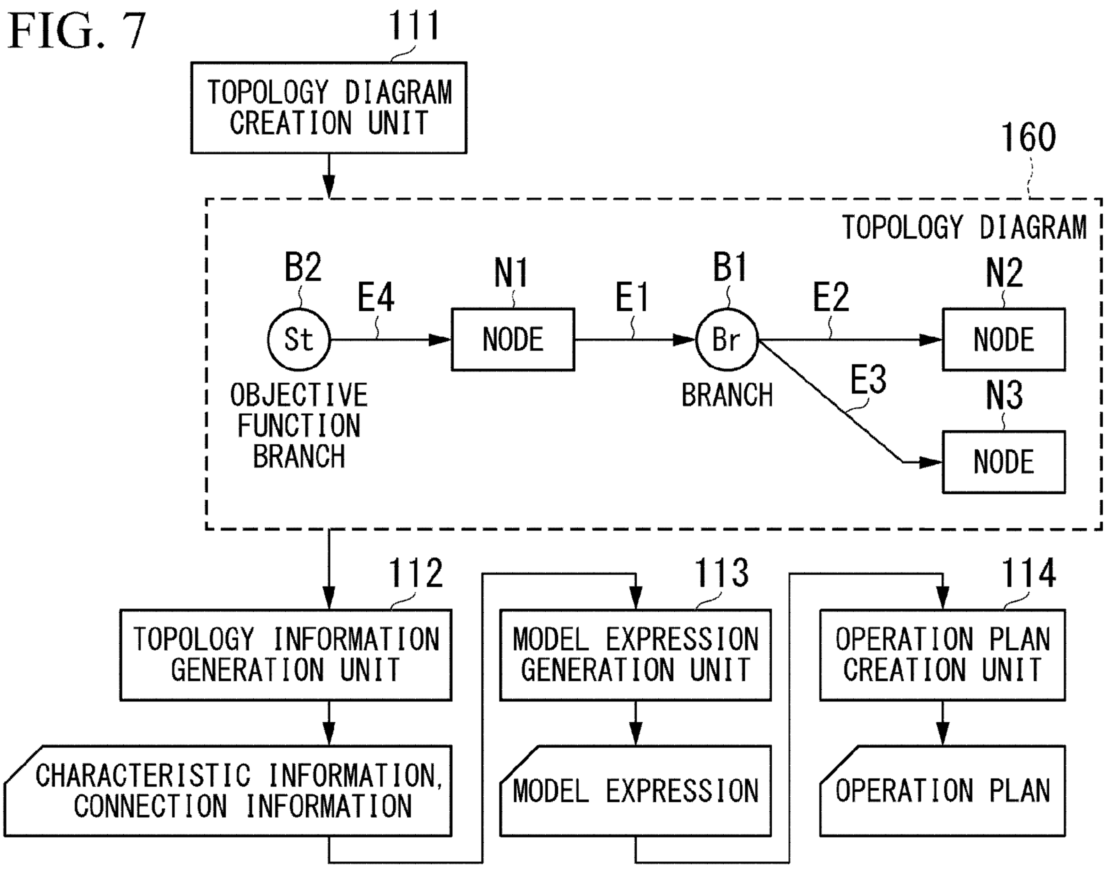
111
TOPOLOGY DIAGRAM CREATION UNIT
160
TOPOLOGY DIAGRAM
B2
St
OBJECTIVE FUNCTION BRANCH
E4
N1
NODE
E1
B1
Br
BRANCH
E2
N2
NODE
E3
N3
NODE
112
TOPOLOGY INFORMATION GENERATION UNIT
CHARACTERISTIC INFORMATION, CONNECTION INFORMATION
113
MODEL EXPRESSION GENERATION UNIT
MODEL EXPRESSION
114
OPERATION PLAN CREATION UNIT
OPERATION PLAN

FIG. 8

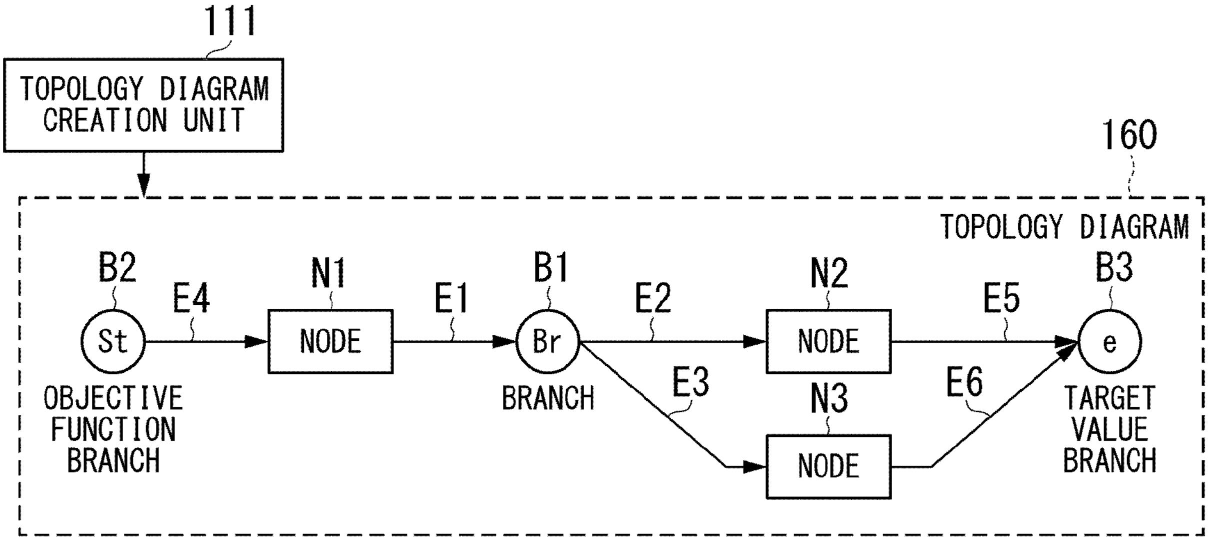
111
TOPOLOGY DIAGRAM CREATION UNIT
160
TOPOLOGY DIAGRAM
B2
St
OBJECTIVE FUNCTION BRANCH
E4
N1
NODE
E1
B1
Br
BRANCH
E2
E3
N2
NODE
N3
NODE
E5
E6
B3
e
TARGET VALUE BRANCH

FIG. 9

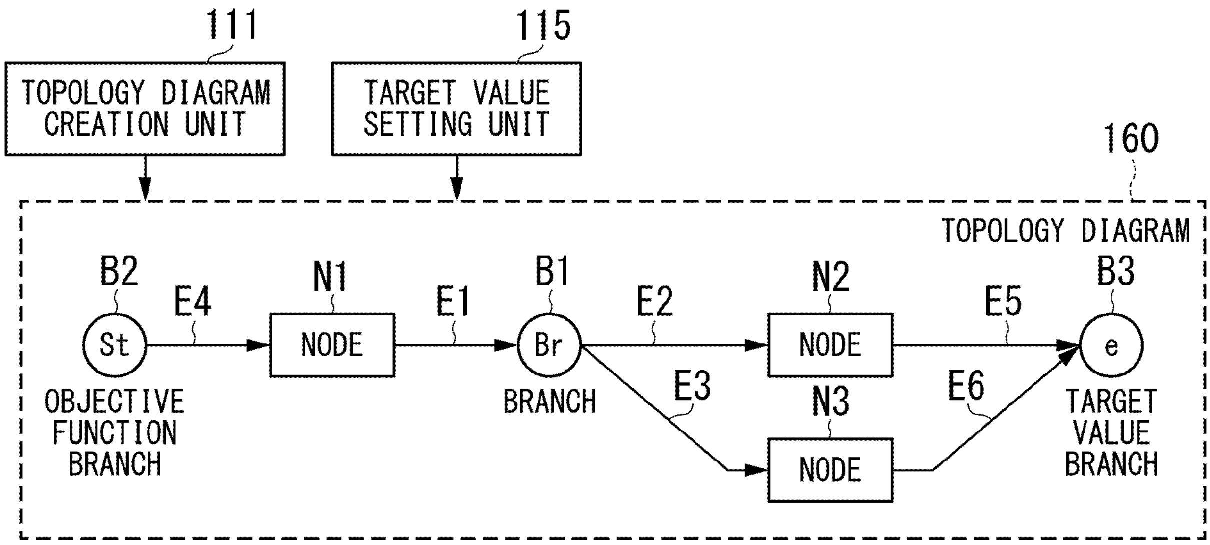
111
TOPOLOGY DIAGRAM CREATION UNIT
115
TARGET VALUE SETTING UNIT
160
TOPOLOGY DIAGRAM
B2
St
OBJECTIVE FUNCTION BRANCH
E4
N1
NODE
E1
B1
Br
BRANCH
E2
E3
N2
NODE
N3
NODE
E5
E6
B3
e
TARGET VALUE BRANCH

FIG. 10

| MESH NUMBER | TIME PERIOD | TARGET VALUE (POWER DEMAND AMOUNT) |
|---|---|---|
| 1 | 0:00～0:30 | 448.0 |
| 2 | 0:30～1:00 | 459.0 |
| 3 | 1:00～1:30 | 460.0 |
| 4 | 1:30～2:00 | 450.0 |
| 5 | 2:00～2:30 | 448.0 |
| 6 | 2:30～3:00 | 438.0 |
| 7 | 3:00～3:30 | 430.0 |
| ... | ... | ... |

FIG. 11

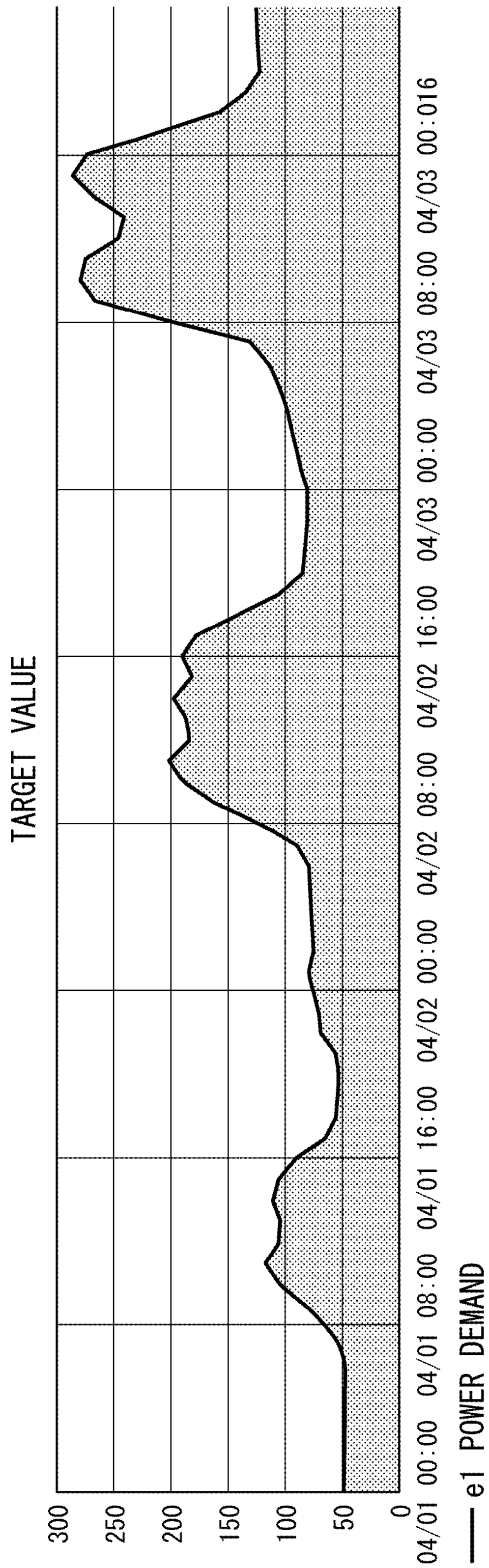
TARGET VALUE
300
250
200
150
100
50
0
04/01 00:00
04/01 08:00
04/01 16:00
04/02 00:00
04/02 08:00
04/02 16:00
04/03 00:00
04/03 08:00
04/03 00:016
e1 POWER DEMAND

FIG. 12

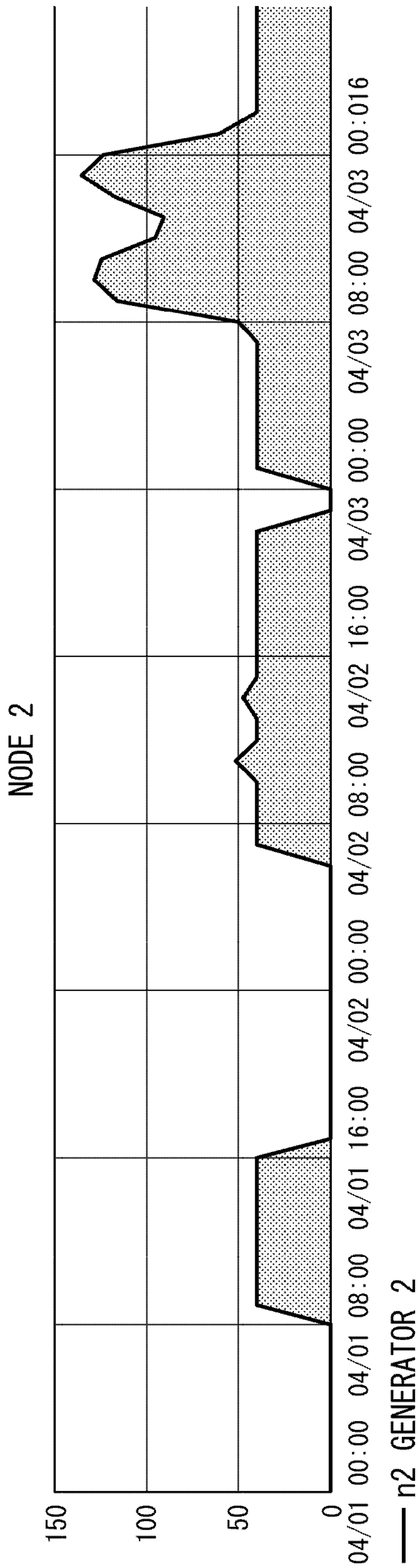
NODE 2
150
100
50
0
04/01 00:00
04/01 08:00
04/01 16:00
04/02 00:00
04/02 08:00
04/02 16:00
04/03 00:00
04/03 08:00
04/03 00:016
n2 GENERATOR 2

FIG. 13

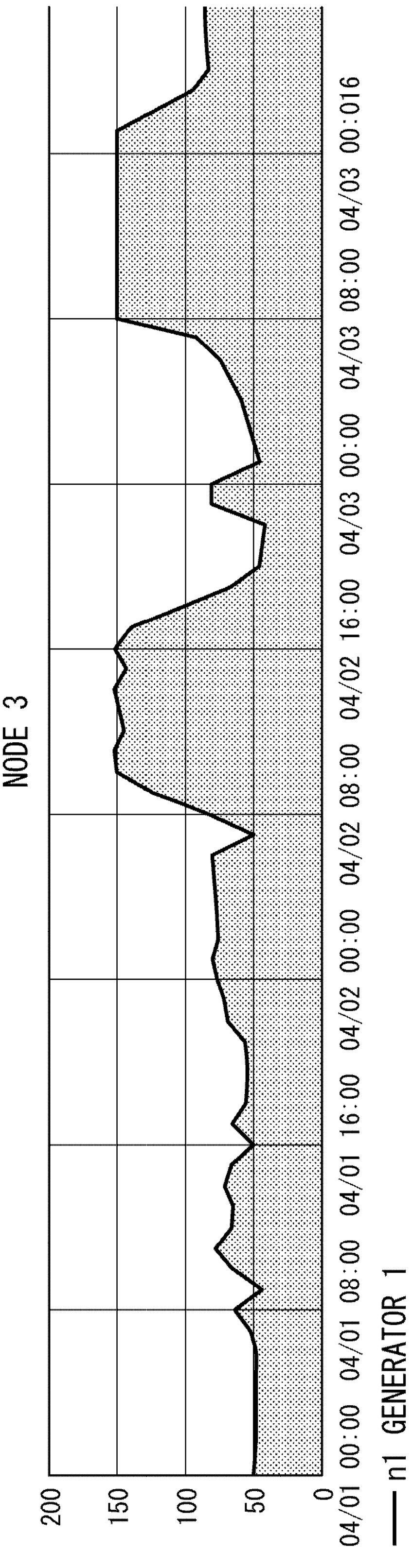
NODE 3
200
150
100
50
0
04/01 00:00
04/01 08:00
04/01 16:00
04/02 00:00
04/02 08:00
04/02 16:00
04/03 00:00
04/03 08:00
04/03 00:016
n1 GENERATOR 1

FIG. 14

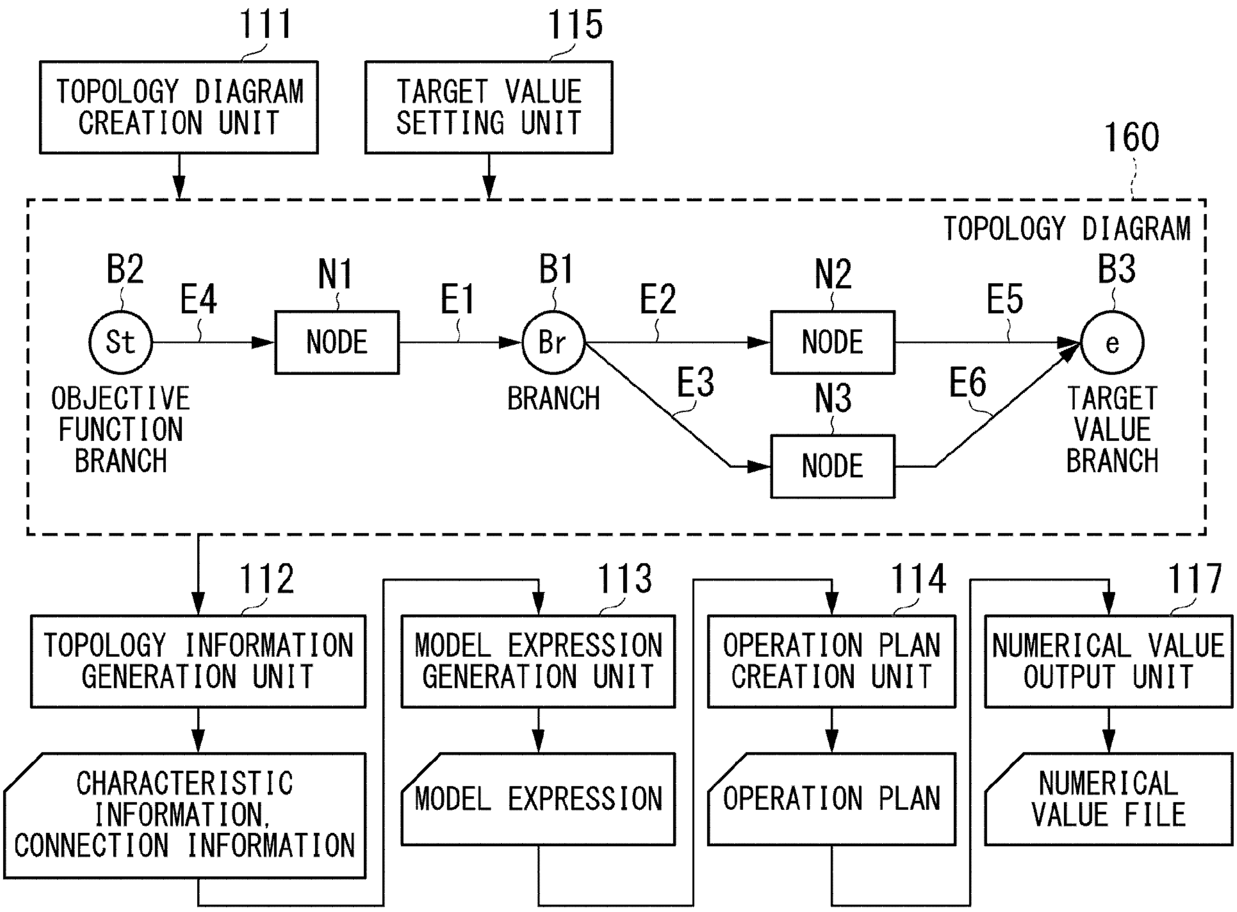
111
TOPOLOGY DIAGRAM CREATION UNIT
115
TARGET VALUE SETTING UNIT
160
TOPOLOGY DIAGRAM
B2
E4
N1
E1
B1
E2
N2
E5
B3
St
NODE
Br
NODE
e
OBJECTIVE FUNCTION BRANCH
BRANCH
E3
N3
E6
NODE
TARGET VALUE BRANCH
112
TOPOLOGY INFORMATION GENERATION UNIT
113
MODEL EXPRESSION GENERATION UNIT
114
OPERATION PLAN CREATION UNIT
117
NUMERICAL VALUE OUTPUT UNIT
CHARACTERISTIC INFORMATION, CONNECTION INFORMATION
MODEL EXPRESSION
OPERATION PLAN
NUMERICAL VALUE FILE

FIG. 15

| MESH NUMBER | DATE AND TIME | OBJECTIVE FUNCTION (FUEL COST) | TARGET VALUE (POWER DEMAND AMOUNT) | NODE 2 OUTPUT (GENERATED POWER) | NODE 3 OUTPUT (GENERATED POWER) | NODE 2 INPUT (USED FUEL AMOUNT) | NODE 3 INPUT (USED FUEL AMOUNT) |
|---|---|---|---|---|---|---|---|
| 101 | 2023/4/1 0:00 | 1.85866667 | 47.88 | 0 | 47.88 | 0 | 1.85866667 |
| 102 | 2023/4/1 1:00 | 1.80266667 | 47.04 | 0 | 47.04 | 0 | 1.80266667 |
| 103 | 2023/4/1 2:00 | 1.75466667 | 46.32 | 0 | 46.32 | 0 | 1.75466667 |
| 104 | 2023/4/1 3:00 | 1.73066667 | 45.96 | 0 | 45.96 | 0 | 1.73066667 |
| 105 | 2023/4/1 4:00 | 1.73866667 | 46.08 | 0 | 46.08 | 0 | 1.73866667 |
| 106 | 2023/4/1 5:00 | 1.75466667 | 46.32 | 0 | 46.32 | 0 | 1.75466667 |
| 107 | 2023/4/1 6:00 | 1.77866667 | 46.68 | 0 | 46.68 | 0 | 1.77866667 |
| 108 | 2023/4/1 7:00 | 1.05066667 | 50.76 | 0 | 50.76 | 0 | 2.05066667 |
| 109 | 2023/4/1 8:00 | 1.81066667 | 62.16 | 0 | 62.16 | 0 | 2.81066667 |
| 110 | 2023/4/1 9:00 | 3.963522 | 81.93783 | 40 | 41.93783 | 2.5 | 1.462522 |
| 111 | 2023/4/1 10:00 | 5.408834 | 103.63251 | 40 | 63.63251 | 2.5 | 2.908834 |
| 112 | 2023/4/1 11:00 | 6.24327933 | 116.14919 | 40 | 76.14919 | 2.5 | 3.74327933 |
| 113 | 2023/4/1 12:00 | 5.45667333 | 104.3501 | 40 | 64.3501 | 2.5 | 2.95667333 |
| 114 | 2023/4/1 13:00 | 5.37668333 | 103.15025 | 40 | 63.15025 | 2.5 | 2.87668333 |
| 115 | 2023/4/1 14:00 | 5.79930867 | 109.48963 | 40 | 69.48963 | 2.5 | 3.29930867 |
| 116 | 2023/4/1 15:00 | 5.485992 | 104.78988 | 40 | 64.78988 | 2.5 | 2.985992 |
| 117 | 2023/4/1 16:00 | 4.51285667 | 90.9285 | 40 | 50.19285 | 2.5 | 2.01285667 |
| 118 | 2023/4/1 17:00 | 2.92786267 | 63.91794 | 0 | 63.91794 | 0 | 2.92786267 |
| 119 | 2023/4/1 18:00 | 2.26666667 | 54 | 0 | 54 | 0 | 2.26666667 |
| 120 | 2023/4/1 19:00 | 2.18666667 | 52.8 | 0 | 52.8 | 0 | 2.18666667 |
| 121 | 2023/4/1 20:00 | 2.21866667 | 53.28 | 0 | 53.28 | 0 | 2.21866667 |
| 122 | 2023/4/1 21:00 | 2.34666667 | 55.2 | 0 | 55.2 | 0 | 2.34666667 |
| 123 | 2023/4/1 22:00 | 3.15333333 | 67.3 | 0 | 67.3 | 0 | 3.15333333 |
| 124 | 2023/4/1 23:00 | 3.34666667 | 70.2 | 0 | 70.2 | 0 | 3.34666667 |

FIG. 16

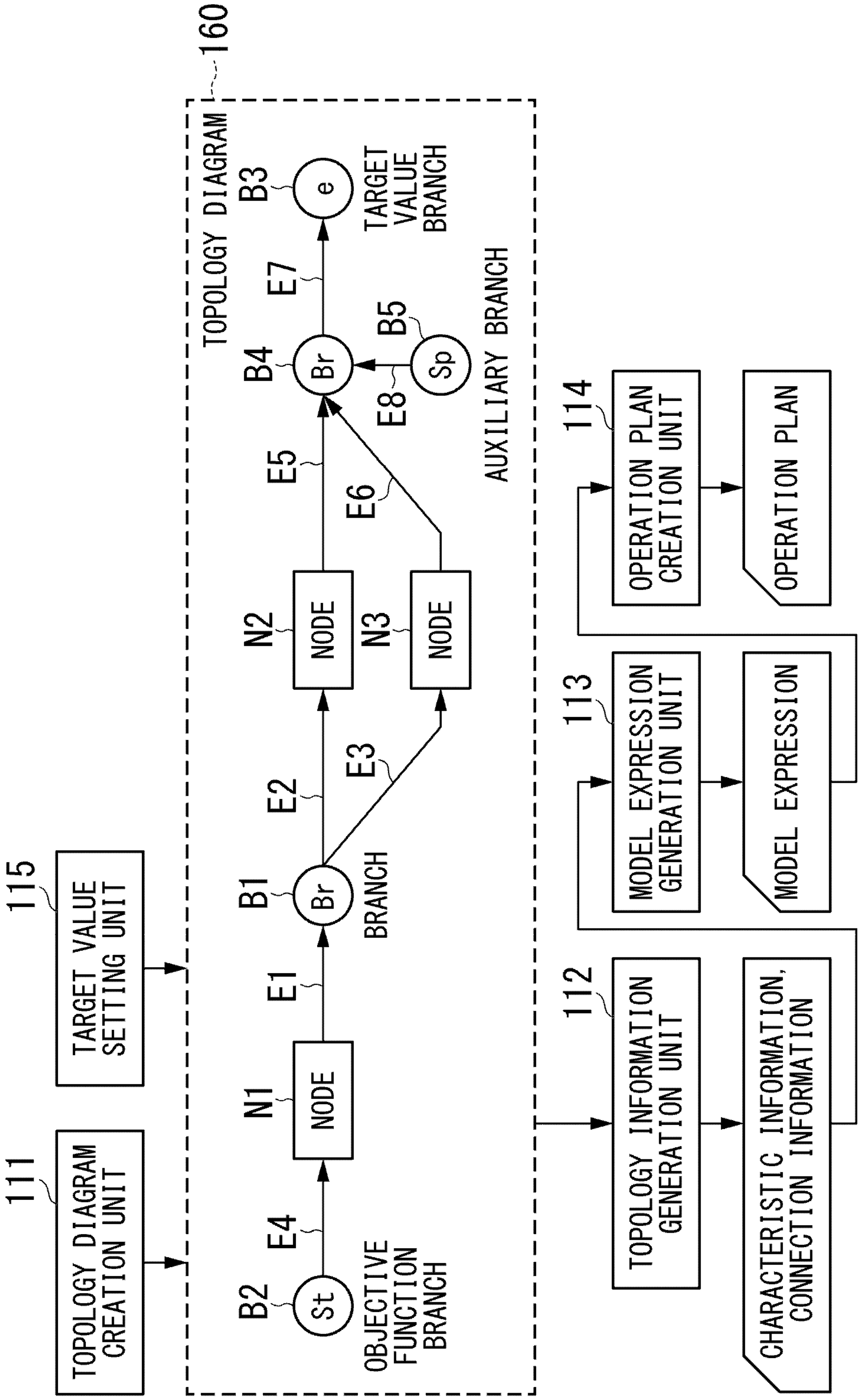
111
TOPOLOGY DIAGRAM CREATION UNIT
115
TARGET VALUE SETTING UNIT
160
TOPOLOGY DIAGRAM
B2
St
OBJECTIVE FUNCTION BRANCH
E4
N1
NODE
E1
B1
Br
BRANCH
E2
E3
N2
NODE
N3
NODE
E5
E6
B4
Br
E8
B5
Sp
AUXILIARY BRANCH
E7
B3
e
TARGET VALUE BRANCH
112
TOPOLOGY INFORMATION GENERATION UNIT
CHARACTERISTIC INFORMATION, CONNECTION INFORMATION
113
MODEL EXPRESSION GENERATION UNIT
MODEL EXPRESSION
114
OPERATION PLAN CREATION UNIT
OPERATION PLAN

FIG. 17

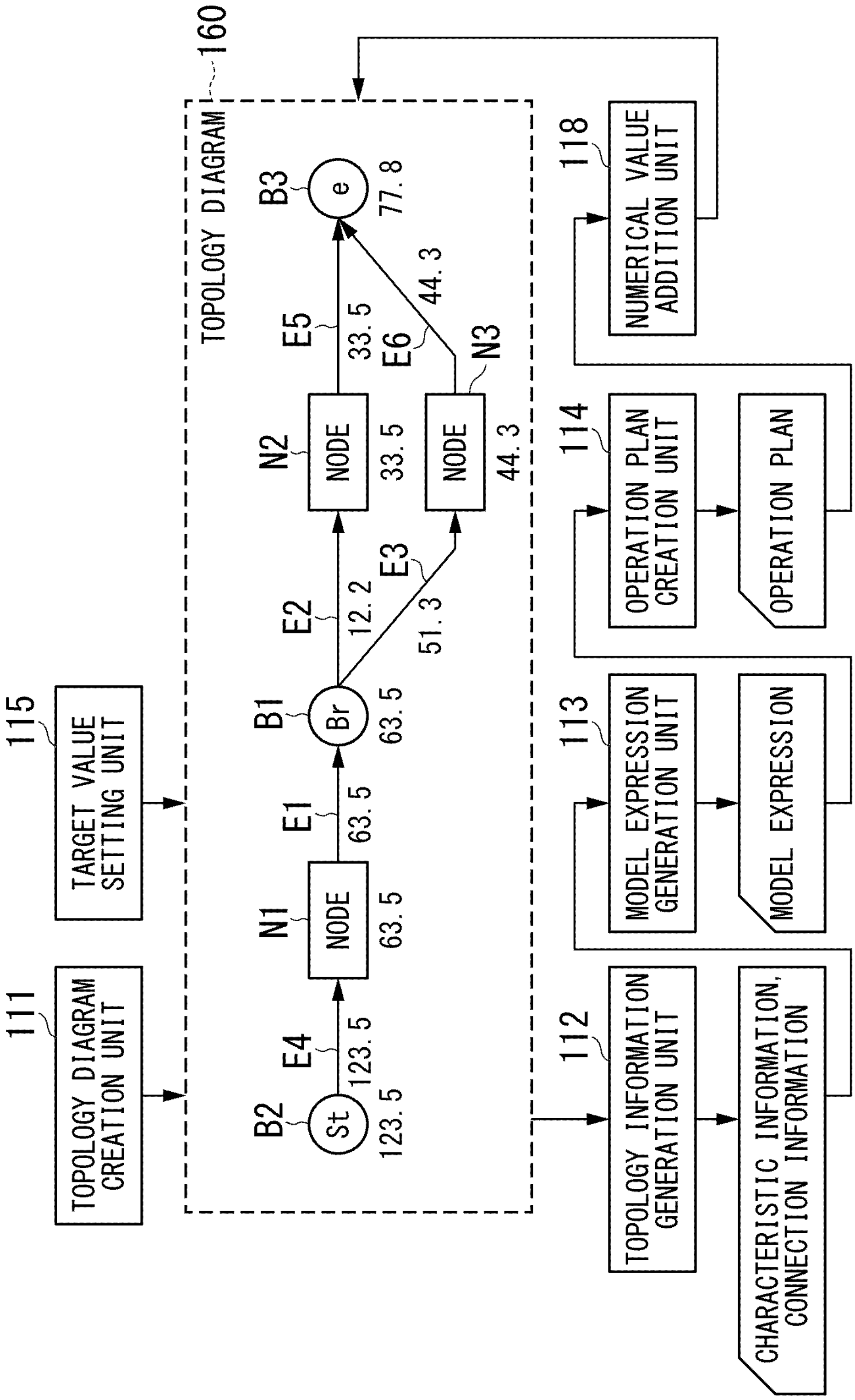

111
TOPOLOGY DIAGRAM CREATION UNIT
115
TARGET VALUE SETTING UNIT
160
TOPOLOGY DIAGRAM
B2
St
123.5
E4
123.5
N1
NODE
63.5
E1
63.5
B1
Br
63.5
E2
12.2
E3
51.3
N2
NODE
33.5
N3
NODE
44.3
E5
33.5
E6
44.3
B3
e
77.8
112
TOPOLOGY INFORMATION GENERATION UNIT
CHARACTERISTIC INFORMATION, CONNECTION INFORMATION
113
MODEL EXPRESSION GENERATION UNIT
MODEL EXPRESSION
114
OPERATION PLAN CREATION UNIT
OPERATION PLAN
118
NUMERICAL VALUE ADDITION UNIT

FIG. 18

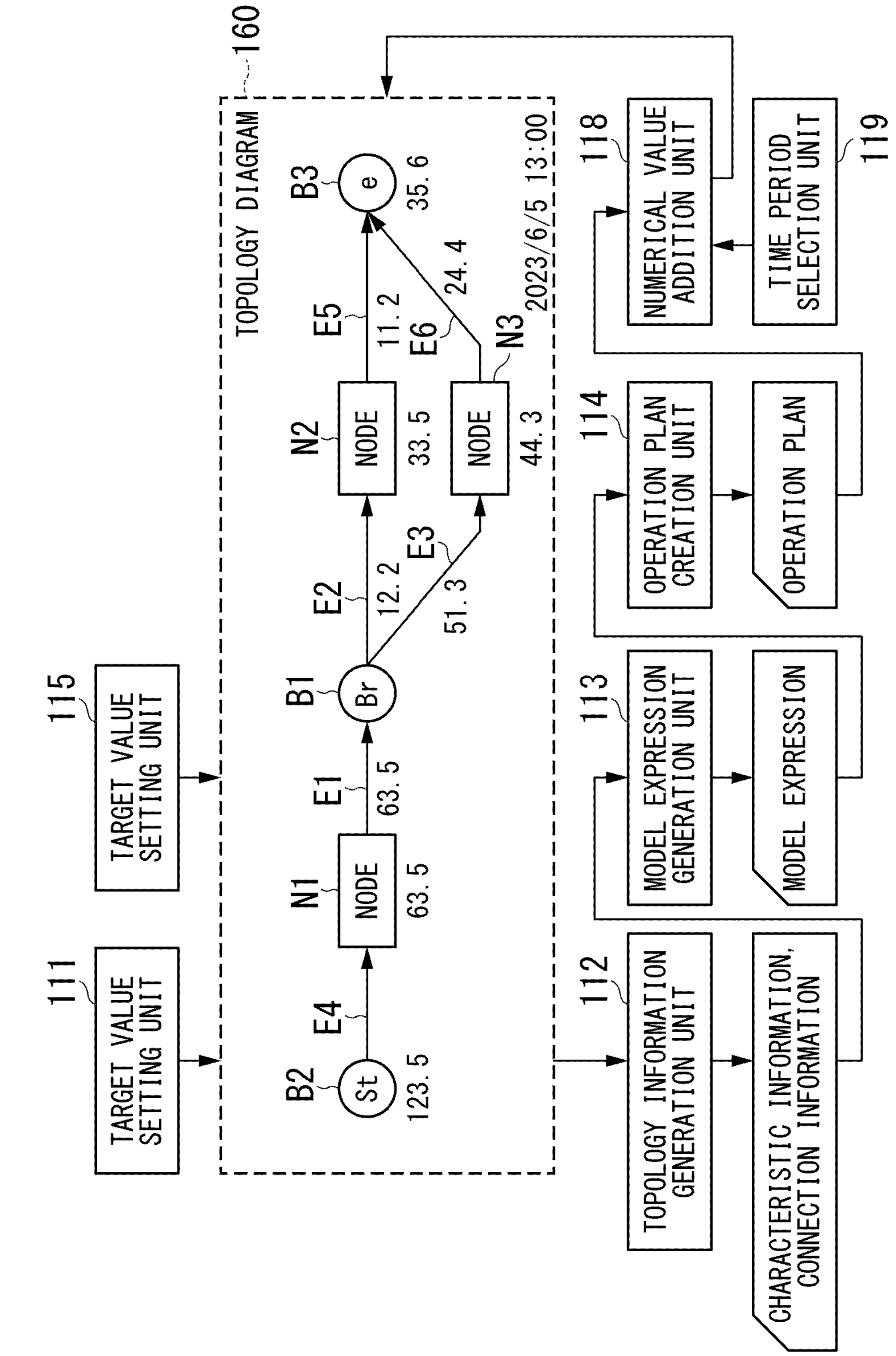
TARGET VALUE SETTING UNIT
111
TARGET VALUE SETTING UNIT
115
TOPOLOGY DIAGRAM
160
B2
St
123.5
E4
N1
NODE
63.5
E1
63.5
B1
Br
E2
12.2
E3
51.3
N2
NODE
33.5
N3
NODE
44.3
E5
11.2
E6
24.4
B3
e
35.6
2023/6/5 13:00
TOPOLOGY INFORMATION GENERATION UNIT
112
CHARACTERISTIC INFORMATION, CONNECTION INFORMATION
MODEL EXPRESSION GENERATION UNIT
113
MODEL EXPRESSION
OPERATION PLAN CREATION UNIT
114
OPERATION PLAN
NUMERICAL VALUE ADDITION UNIT
118
TIME PERIOD SELECTION UNIT
119

FIG. 19

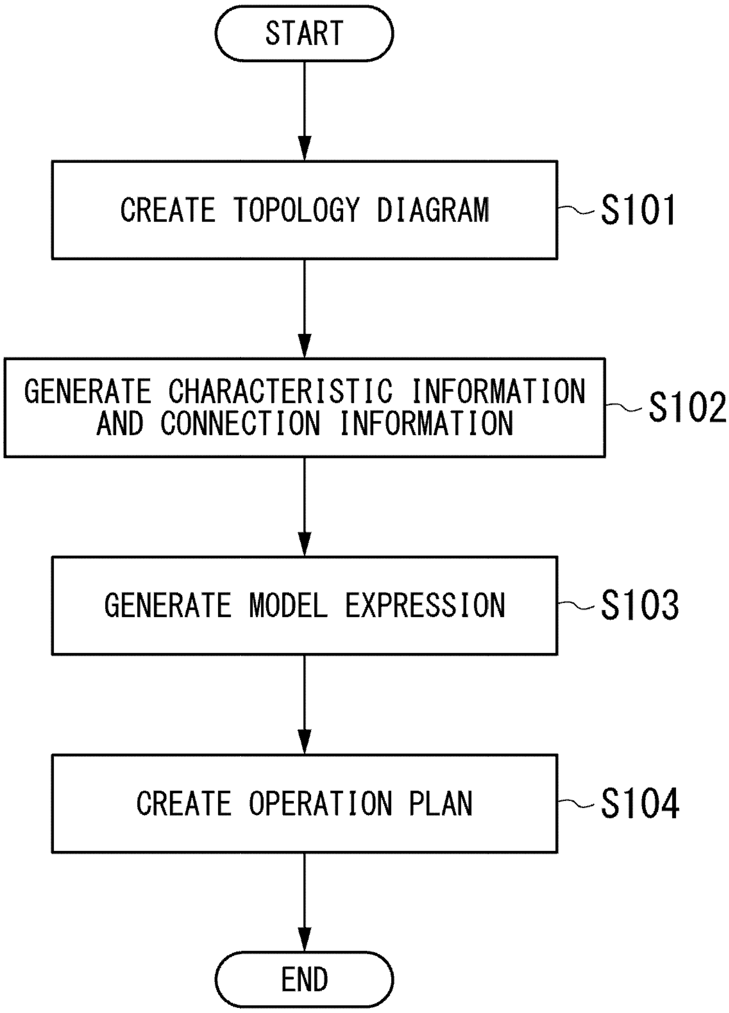
START
CREATE TOPOLOGY DIAGRAM
S101
GENERATE CHARACTERISTIC INFORMATION AND CONNECTION INFORMATION
S102
GENERATE MODEL EXPRESSION
S103
CREATE OPERATION PLAN
S104
END

FIG. 20

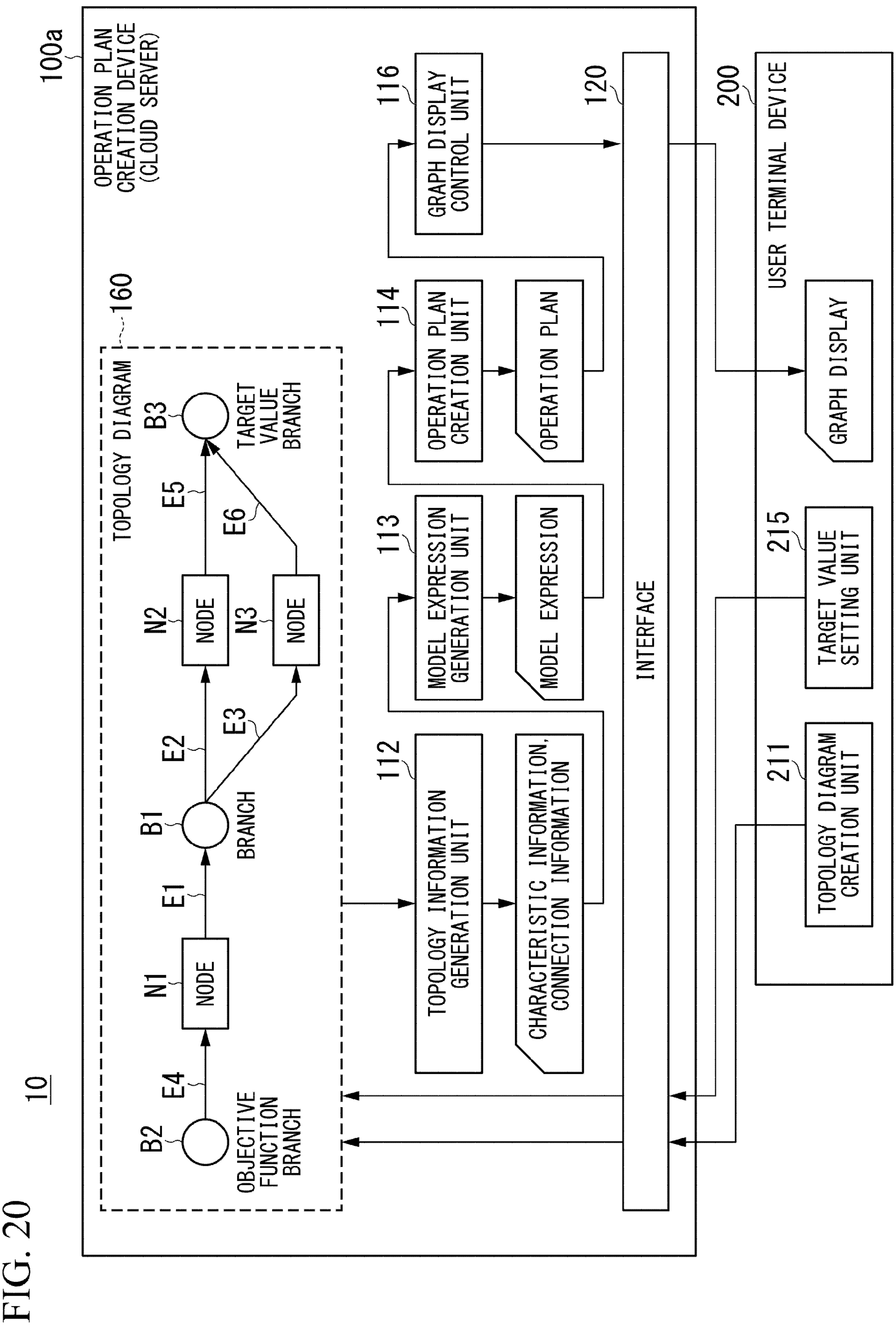
10
100a
OPERATION PLAN CREATION DEVICE (CLOUD SERVER)
160
TOPOLOGY DIAGRAM
B2
OBJECTIVE FUNCTION BRANCH
E4
N1
NODE
E1
B1
BRANCH
E2
E3
N2
NODE
N3
NODE
E5
E6
B3
TARGET VALUE BRANCH
112
TOPOLOGY INFORMATION GENERATION UNIT
CHARACTERISTIC INFORMATION, CONNECTION INFORMATION
113
MODEL EXPRESSION GENERATION UNIT
MODEL EXPRESSION
114
OPERATION PLAN CREATION UNIT
OPERATION PLAN
116
GRAPH DISPLAY CONTROL UNIT
120
INTERFACE
200
USER TERMINAL DEVICE
211
TOPOLOGY DIAGRAM CREATION UNIT
215
TARGET VALUE SETTING UNIT
GRAPH DISPLAY

FIG. 21

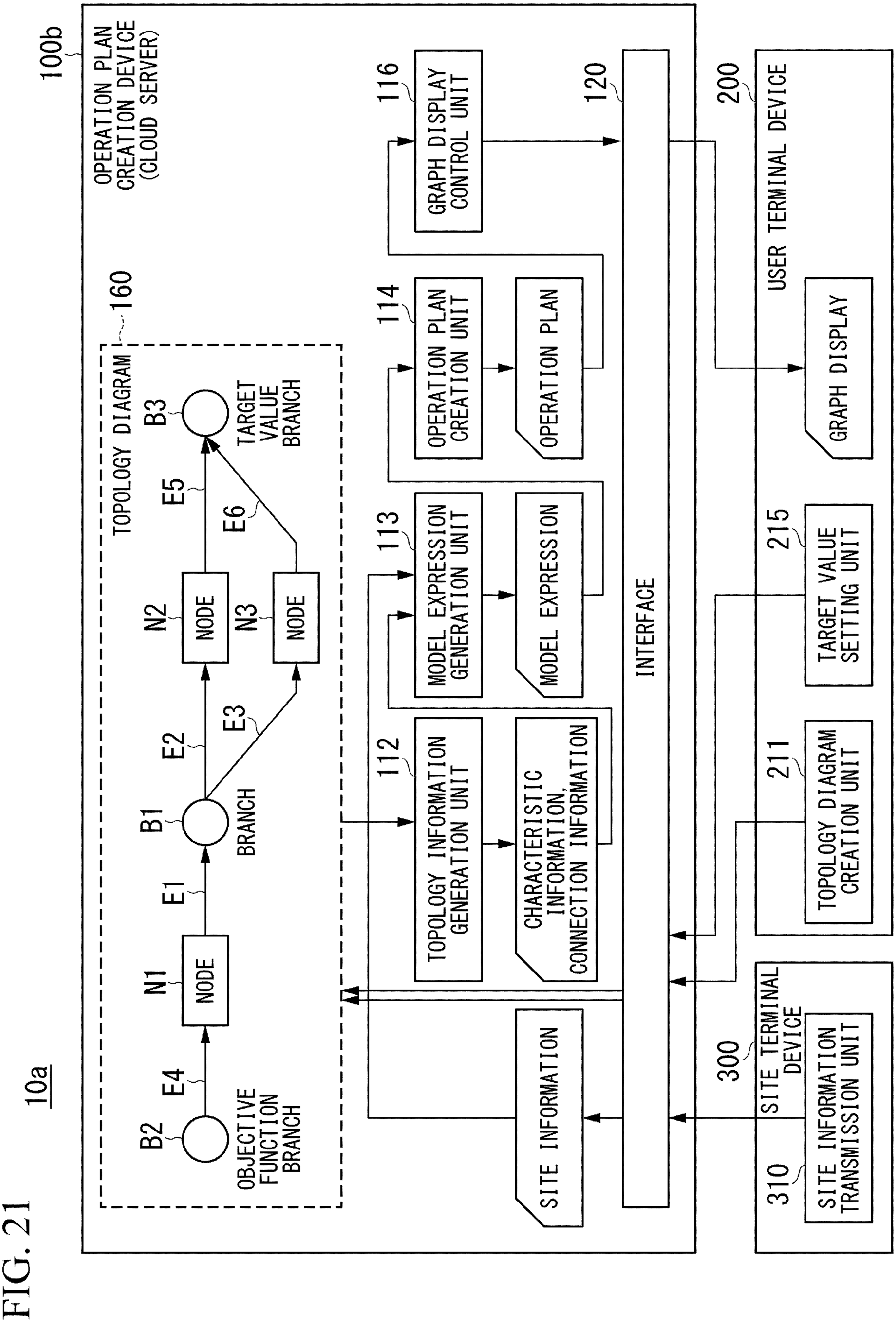
10a
100b
OPERATION PLAN CREATION DEVICE (CLOUD SERVER)
160
TOPOLOGY DIAGRAM
B2
OBJECTIVE FUNCTION BRANCH
E4
N1
NODE
E1
B1
BRANCH
E2
E3
N2
NODE
N3
NODE
E5
E6
B3
TARGET VALUE BRANCH
SITE INFORMATION
112
TOPOLOGY INFORMATION GENERATION UNIT
CHARACTERISTIC INFORMATION, CONNECTION INFORMATION
113
MODEL EXPRESSION GENERATION UNIT
MODEL EXPRESSION
114
OPERATION PLAN CREATION UNIT
OPERATION PLAN
116
GRAPH DISPLAY CONTROL UNIT
120
INTERFACE
200
USER TERMINAL DEVICE
211
TOPOLOGY DIAGRAM CREATION UNIT
215
TARGET VALUE SETTING UNIT
GRAPH DISPLAY
300
SITE TERMINAL DEVICE
310
SITE INFORMATION TRANSMISSION UNIT

FIG. 22

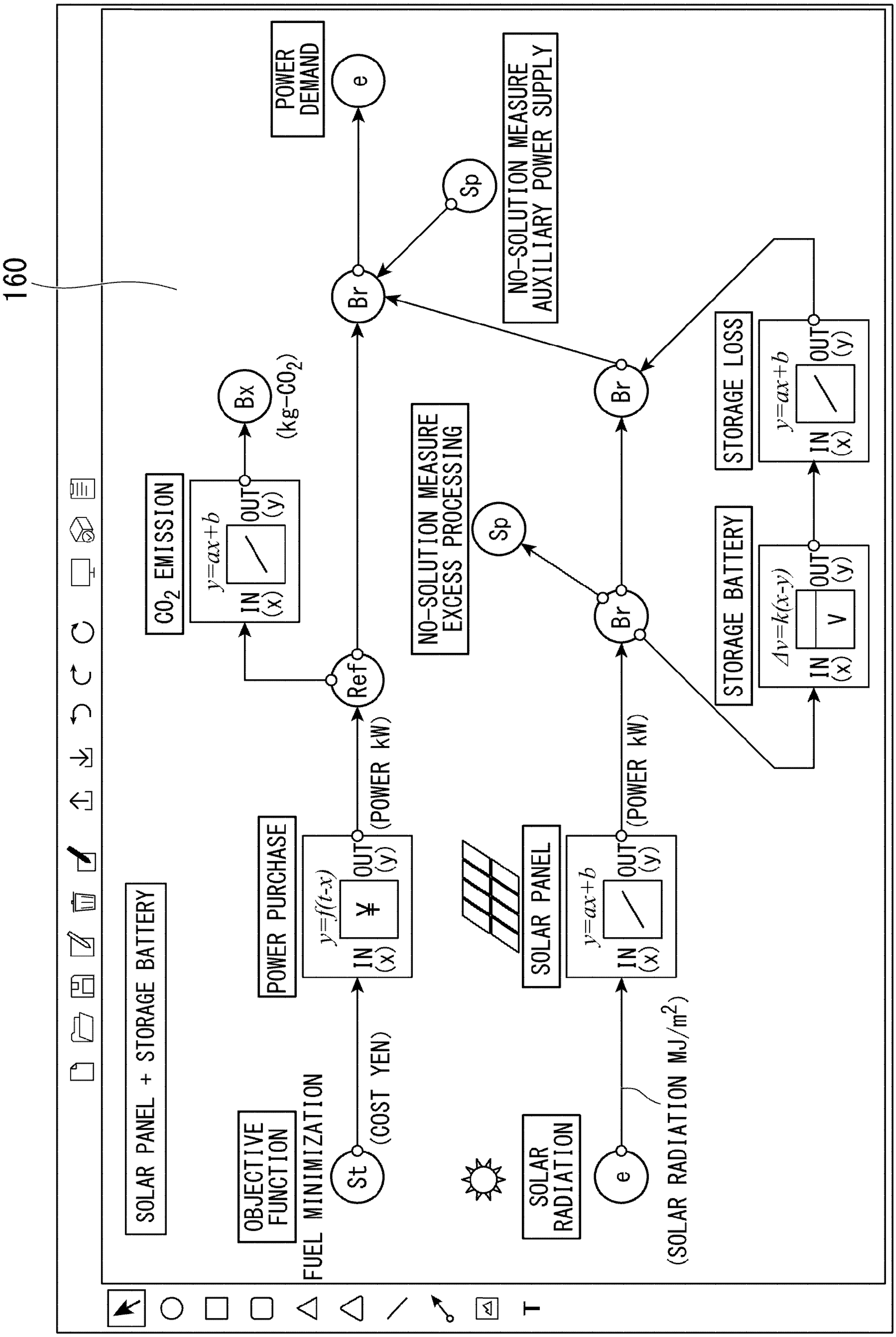
160
SOLAR PANEL + STORAGE BATTERY
OBJECTIVE FUNCTION
FUEL MINIMIZATION
St
(COST YEN)
POWER PURCHASE
y=f(t-x)
IN (x)
OUT (y)
¥
(POWER kW)
Ref
CO2 EMISSION
y=ax+b
IN (x)
OUT (y)
Bx
(kg-CO2)
Br
POWER DEMAND
e
Sp
NO-SOLUTION MEASURE
AUXILIARY POWER SUPPLY
SOLAR RADIATION
e
(SOLAR RADIATION MJ/m2)
SOLAR PANEL
y=ax+b
IN (x)
OUT (y)
(POWER kW)
Br
Sp
NO-SOLUTION MEASURE
EXCESS PROCESSING
Br
STORAGE BATTERY
Δv=k(x-y)
V
IN (x)
OUT (y)
STORAGE LOSS
y=ax+b
IN (x)
OUT (y)
T

Europäisches Patentamt
European Patent Office
Office européen des brevets

# EUROPEAN SEARCH REPORT

Application Number
EP 24 18 9544

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | US 2015/058270 A1 (KAWATA MIKA [JP] ET AL) 26 February 2015 (2015-02-26)<br>* paragraph [0114] - paragraph [0247]; figures 2, 6-10 * | 1-3,7-9, 11-16<br>4-6,10 | INV.<br>G06Q10/04<br>G06Q10/06<br>G06F30/00<br>G05B19/418 |
| X<br><br>Y<br>A | US 2017/132538 A1 (OHARA KENICHI [JP] ET AL) 11 May 2017 (2017-05-11)<br>* paragraph [0040] - paragraph [0053]; figures 2-5 *<br>* paragraph [0090] - paragraph [0100]; figures 13-16 * | 1-3,7-9, 11-16<br>4-6<br>10 | |
| Y<br><br>A | EP 2 500 787 B1 (ROCKWELL AUTOMATION TECH INC [US]) 17 August 2016 (2016-08-17)<br>* paragraph [0063] - paragraph [0064]; figure 8 * | 10<br><br>1-9, 11-16 | |
| | | | TECHNICAL FIELDS SEARCHED (IPC) |
| | | | G06Q |

The present search report has been drawn up for all claims

1

| Place of search | Date of completion of the search | Examiner |
|---|---|---|
| Munich | 20 September 2024 | Radovic, Dusica |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 24 18 9544

This annex lists the patent family members relating to the patent documents cited in the above-mentioned European search report. The members are as contained in the European Patent Office EDP file on
The European Patent Office is in no way liable for these particulars which are merely given for the purpose of information.

20-09-2024

| Patent document cited in search report | Publication date | Patent family member(s) | Publication date |
|---|---|---|---|
| US 2015058270 A1 | 26-02-2015 | CN 104424512 A | 18-03-2015 |
| | | EP 2840535 A1 | 25-02-2015 |
| | | JP 5858080 B2 | 10-02-2016 |
| | | JP 2015062102 A | 02-04-2015 |
| | | US 2015058270 A1 | 26-02-2015 |
| US 2017132538 A1 | 11-05-2017 | CN 106991514 A | 28-07-2017 |
| | | EP 3166057 A1 | 10-05-2017 |
| | | JP 6337869 B2 | 06-06-2018 |
| | | JP 2017091056 A | 25-05-2017 |
| | | US 2017132538 A1 | 11-05-2017 |
| EP 2500787 B1 | 17-08-2016 | CN 102707621 A | 03-10-2012 |
| | | EP 2500787 A1 | 19-09-2012 |
| | | US 2012239169 A1 | 20-09-2012 |

EPO FORM P0459

For more details about this annex : see Official Journal of the European Patent Office, No. 12/82